# EUROPÄISCHE PATENTSCHRIFT

(11) **EP 0 642 007 B1**
(45) Veröffentlichungstag und Bekanntmachung des Hinweises auf die Patenterteilung: **07.10.1998**
(21) Anmeldenummer: 94111830.9
(22) Anmeldetag: 28.07.1994
(51) Int. Cl.: G01M 1/02, G01M 1/32

(54) **Verfahren und Vorrichtung zum Unwuchtausgleich an einem Kraftfahrzeugrad mit Hilfe von wenigstens einem Ausgleichsgewicht**
Method and apparatus for balancing a wheel with at least one balancing weight
Méthode et appareil pour équilibrer une roue à l'aide d'au moins un poids d'équilibrage

(30) Priorität: 07.09.1993 DE 4330287; 26.10.1993 DE 4336509
(43) Veröffentlichungstag der Anmeldung: 08.03.1995
(73) Patentinhaber: HOFMANN WERKSTATT-TECHNIK GMBH, D-64319 Pfungstadt (DE)
(72) Erfinder: Fuchs, Andreas, D-64372 Ober-Ramstadt (DE); Rühl, Klaus, D-63762 Gross-Ostheim (DE); Rothamel, Karl, D-64342 Seeheim-Jugenheim (DE)
(74) Vertreter: Nöth, Heinz, Dipl.-Phys.

(56) Entgegenhaltungen:
- EP-A- 0 295 217
- EP-A- 0 586 856
- DE-A- 3 034 398
- DE-A- 4 122 844
- US-A- 4 939 941
- US-A- 5 189 912

## Beschreibung

Die Erfindung betrifft ein Verfahren und eine Vorrichtung zum Unwuchtausgleich an einem Kraftfahrzeugrad mit Hilfe von wenigstens einem Ausgleichsgewicht gemäß den Merkmalen des Oberbegriffs des Anspruchs 1 bzw. des Anspruchs 13 sowie eine Auswuchtmaschine mit einer Vorrichtung zur Abtastung geometrischer Daten von auf eine Hauptwelle der Auswuchtmaschine aufspannbaren, auszuwuchtenden Rotationskörpern mit den Merkmalen des Oberbegriffs des Anspruchs 39.

Aus der deutschen Offenlegungsschrift DE 30 34 398 A1 ist eine Vorrichtung zum Auswuchten von Rotoren, insbesondere von Kraftfahrzeugrädern, bekannt geworden, bei der die geometrischen Abmessungen der Rotore mittels Einstellmitteln abgetastet und erfaßt und in eine Auswerteeinrichtung eingegeben werden. Zum Abtasten der geometrischen Abmessungen eines Rotors bzw. Kraftfahrzeugrades, wie z. B. der Lage einer Ausgleichsebene und des jeweiligen Ausgleichsradius, ist ein Hebel vorgesehen, der am Ende einer Lagerachse, die parallel zu einer Aufspannwelle an einem Maschinengehäuse angeordnet ist und zur Schwenklagerung einer über ein aufgespanntes Rad schwenkbaren Schutzhaube dient, befestigt ist und sowohl um die Längsachse der Lagerachse als auch um eine zur Lagerachse senkrechte Drehachse schwenkbeweglich ist, wobei mittels Drehwinkelgebern im Drehpunkt des Hebels an der Lagerachse die jeweiligen Schwenkwinkel erfaßt werden. Im vorderen Bereich des Hebels ist eine Abtasteinrichtung mit einer Abtastfläche vorgesehen, mit der z. B. an einem Felgenhorn die Lage der Ausgleichsebene und somit des Auswuchtgewichtes und der radiale Abstand von der Drehachse des Rades abgetastet wird. Über die Drehwinkelgeber werden aus den Schwenkwinkeln des Hebels und der Hebellänge mittels einer elektronischen Einrichtung die Lage der Ausgleichsebene und der zugehörige Ausgleichsradius für ein Ausgleichsgewicht bestimmt. In einer Auswerteeinrichtung wird nach einem Unwuchtmeßlauf die Größe und die Winkelposition der Ausgleichsgewichte für jede Ausgleichsebene bestimmt und angezeigt.

Aus der deutschen Offenlegungsschrift DE 41 22 844 A1 ist eine Auswuchtmaschine für auf eine Hauptwelle der Maschine aufspannbare Kraftfahrzeugräder bekannt geworden, bei der für eine auf eine oder mehrere Ausgleichsebenen bezogene Unwuchtmessung eine Abtasteinrichtung zur maschinenbezogenen Abstandserfassung der Ausgleichsebene bzw. -ebenen und zur Erfassung des Ausgleichsradius vorgesehen ist, wobei die Abtasteinrichtung ein in einer gemeinsamen Ebene mit der Längsmittelachse der Hauptwelle ausziehbares Abtastorgan aufweist, das mit einer Winkelmeßeinrichtung ausgestattet ist, die eine zum zu erfassenden Ausgleichsradius proportionale Winkelstellung des Abtastorgans mißt, und den abgetasteten Werten entsprechende elektrische Ausgangssignale für eine Auswerteeinrichtung liefert, in welcher während eines Meßlaufs ermittelte Unwuchtmeßwerte zur Unwuchtbestimmung ausgewertet werden.

Aus der europäischen Patentanmeldung EP 0 295 217 A1 ist eine Vorrichtung zum Messen und/oder Überprüfen der räumlichen Position und der Winkelausrichtung von charakteristischen Punkten oder Bereichen an Fahrzeugkarosserien oder anderen Fahrzeugteilen bekannt geworden, die einen Gelenkarm mit mehreren Schwenkgelenken aufweist. Ein erstes Armelement ist an einem Grundträger mittels eines Schwenkgelenks um eine senkrechte Achse in einer horizontalen Ebene verschwenkbar gelagert, wobei die Verschwenkbewegung über ein Zahnradgetriebe auf eine Winkelmeßeinrichtung mit einem Drehwinkelgeber übertragen wird, der ein dem Schwenkwinkel entsprechendes Signal an einen Computer liefert. An dem freien Ende des ersten Armelementes ist mittels eines weiteren Schwenkgelenkes ein zweites Armelement um eine senkrechte Achse verschwenkbar gelagert. Das zweite Armelement ist aus zwei parallelen Stäben gebildet, die in Form eines Gelenkparallelograms an ihren Enden beweglich gelagert sind, so daß das freie Ende des zweiten Armelementes bei seiner Verschwenkung in einer senkrechten Ebene eine senkrechte Ausrichtung beibehält. Damit behält auch ein am freien Ende gelagerter Abtaststift bei einer Verschwenkbewegung des Gelenkarmes seine zu den Schwenkachsen und parallele senkrechte Ausrichtung. In jedem Schwenkgelenk ist eine Winkelmeßeinrichtung vorgesehen, so daß die räumlichen Koordinaten der Spitze des Abtaststiftes bestimmt werden können.

Aus der europäischen Patentanmeldung EP 0 586 856 A1 (die Stand der Technik gemäß Art. 54 (3) EPÜ darstellt) ist ein Verfahren zum Unwuchtausgleich an einem Kraftfahrzeugrad bekannt geworden, bei dem zumindest ein Ausgleichsgewicht, insbesondere Klebegewicht, in einer bestimmten, durch eine Meßelektronik ermittelten Position am Scheibenrad des Kraftfahrzeugrades befestigt wird. Beim Unwuchtausgleichsvorgang wird zur positionsgerechten Anordnung des jeweiligen Ausgleichsgewichtes am Scheibenrad eine mit der Meßelektronik gekoppelte Tasteinrichtung verwendet, mit der zur Auswertung der beim Unwuchtmeßvorgang erhaltenen Meßwerte eine oder mehrere Scheibenradabmessung(en) für eine Einspeicherung in die Meß- bzw. Auswerteelektronik abgetastet wird bzw. werden.

Des weiteren ist in diesem Dokument eine Vorrichtung zum Unwuchtausgleich an einem Kraftfahrzeugrad gemäß dem voranstehend beschriebenen Verfahren offenbart, bei der mit der Tasteinrichtung eine Positionserkennungseinrichtung gekoppelt ist, die wiederum mit einem Speicher verbunden ist, und bei der mit dem Speicher und der Positionserkennungseinrichtung ein Vergleicher verbunden ist, der an eine Anzeigeeinrichtung angeschlossen ist. Somit kann in einem Wiederauffindemodus die Tasteinrichtung an die für ein Ausgleichsgewicht bestimmte Position herangeführt werden.

Des weiteren ist aus der "Hofmann-Betriebsanleitung Radauswuchtmaschine Geodyna 88/88m" (Impr. 9412145 09.86) eine Auswuchtmaschine bekannt, an deren Grundkörper ein linker Meßtaster zum Ermitteln des maschinenbezogenen Abstandes des linken Felgenhornes eines aufgespannten Rades und ein rechter Meßtaster zum Ermitteln des Maßes des rechten Felgenhornes angeordnet ist. Ein Meßhebel des rechten Meßtasters ist an einer separaten Halte- oder Führungsstange, die parallel zu einer Befestigungsachse einer Radschutzhaube und längsbeweglich gegenüber dem Grundkörper der Auswuchtmaschine ist, um die Längsachse der Führungsstange schwenkbar befestigt. Zur Breitenmessung, d. h. zur Abtastung der rechten Seite oder der rechten Ausgleichsebene einer aufgespannten Felge, wird der Meßhebel mit seinem Meßfinger in seine Meßposition gebracht, indem er mit der Führungsstange längs auf die Felge zubewegt wird und indem er um die Längsachse der Führungsstange verdreht wird.

Des weiteren ist bekannt (DE-AS 2,001,972 oder Hofmann-Betriebsanleitung Radauswuchtmaschine Geodyna 88/88m, Impr. 9412145-09.86), Abmessungen, insbesondere im Felgenbereich des Kraftfahrzeugrades mit Hilfe einer Abtastvorrichtung zu ermitteln und in der Meßelektronik abzuspeichern. Hierdurch werden der Meßelektronik entsprechende Informationen geliefert für die Berechnung der Größen und Winkellagen der Ausgleichsgewichte, die in den entsprechenden Ausgleichsebenen am Scheibenrad des Kraftfahrzeugrades anzubringen sind. Aus der deutschen Offenlegungsschrift DE-OS 27 37 524 ist es bei normaler Ausgleichsart, d.h. beim Anbringen der Ausgleichsgewichte an den Felgenhörnern, bekannt, die am Kraftfahrzeugrad angegebenen Nennwerte für die geometrischen Abmessungen bei der Eingabe in den Speicher der Meßelektronik mit einem Korrekturwert zu beaufschlagen, um den axialen Abstand des Schwerpunkts des Ausgleichsgewichts in der jeweiligen Ausgleichsebene zu berücksichtigen.

Aufgabe der Erfindung ist es, ein Verfahren und eine Vorrichtung zum Unwuchtausgleich an einem Kraftfahrzeugrad gemäß den Merkmalen des Oberbegriffs des Anspruchs 1 bzw. des Anspruchs 13 sowie eine Auswuchtmaschine mit den Merkmalen des Oberbegriffs des Anspruchs 39 dahingehend weiterzubilden, daß der Auswuchtvorgang erleichtert und damit bedienerfreundlicher wird.

Diese Aufgabe wird erfindungsgemäß durch ein Verfahren mit den Merkmalen des Anspruchs 1 sowie durch die Gegenstände mit den in den Patentansprüchen 13 bzw. 39 angegebenen Merkmalen gelöst.
Vorteilhafte Ausgestaltungen der Erfindung sind in den jeweiligen abhängigen Ansprüchen angegeben.

Bei dem Verfahren bzw. der Vorrichtung gemäß der Erfindung wird die mit der Meßelektronik gekoppelte Abtastvorrichtung, welche vor oder nach Durchführung des Unwuchtmeßvorgangs zur Einspeicherung der entsprechenden bei der Auswertung der Meßwerte zu berücksichtigenden Scheibenrad- bzw. Felgenabmessungen in die Meßelektronik verwendet wurde, ausgenützt, um den Unwuchtausgleichsvorgang, d.h. das positionsgerechte Anordnen des jeweiligen Ausgleichsgewichts am Scheibenrad in der jeweiligen Ausgleichsebene zu erleichtern. Auf diese Weise erreicht man eine höhere Genauigkeit beim Einsetzen, insbesondere von Klebegewichten in die je nach Felgen- bzw. Scheibenradtyp unterschiedlichen Ausgleichsebenen. Hierbei läßt sich die Genauigkeit vor allem dadurch erhöhen, daß zwischen der vor oder nach dem Unwuchtmeßvorgang durch die Abtastvorrichtung abgetasteten Ausgleichsebene und dem ebenfalls abgetasteten wirksamen Ausgleichsradius für die Auswertung der Meßwerte (Abtastmodus) und der bei der positionsgerechten Anordnung des jeweiligen Ausgleichsgewichts, insbesondere Klebegewichts, am Scheibenrad aufzufindenden Ausgleichsebene über die in die Meßelektronik eingespeicherte Ausgleichsebenenposition (Wiederauffindemodus) eine exakte Korrelation vorhanden ist, die mit Hilfe der Abtastvorrichtung beim Ausgleichsvorgang ausgenützt wird.

Hierbei ist es möglich, das Wiederauffinden der vor oder nach der Durchführung des Unwuchtmeßvorgangs in die Meßelektronik eingespeicherten Ausgleichsebenenposition zu erleichtern. Dies kann dadurch geschehen, daß mit Hilfe der beispielsweise als Taststange, Tasthebel oder als erfindungsgemäßem Meßtasthebel ausgebildeten Abtastvorrichtung die vorher ausgemessene Ausgleichsebene angefahren wird und der jeweilige Abstand der Tastspitze des Meßtasthebels oder des beim Unwuchtausgleich wirksamen Schwerpunkts des Ausgleichsgewichts von der wieder aufzufindenden Ausgleichsebene durch entsprechende Signale sichtbar oder hörbar gemacht wird. Dabei kann der jeweilige noch vorhandene Abstand zu der wieder aufzufindenden Ausgleichsebene digital oder auf andere Art angezeigt werden. Beim Wiederauffinden der gesuchten Ausgleichsebene kann ein optisches oder auch ein akustisches Signal der Bedienungsperson anzeigen, daß mit der Abtastvorrichtung die gesuchte bzw. die wieder aufzufindende Ausgleichsebene erreicht ist.

Dabei kann nach Durchführung der Unwuchtmeßläufe und Anzeige der Ergebnisse des Meßlaufs für die Positionierung der Ausgleichsgewichte, insbesondere Klebegewichte, am Scheibenrad bzw. der Felgenschüssel die Abtastvorrichtung, die beispielsweise wie in der deutschen Patentanmeldung DE 41 22 844 A1 beschrieben oder gemäß dem Meßtaster der vorliegenden Erfindung ausgebildet ist, aus der Ruhelage gebracht werden, wodurch ein Schalter betätigt wird, welcher die Meß- bzw. Auswerteelektronik der Auswuchtmaschine auf den Betriebsmodus "Wiederauffinden der Ausgleichsebenen" (Wiederauffindemodus) schaltet. Die Umschaltung kann durch einen manuell betätigbaren Schalter, z.B. Tastenschalter oder ähnliche Betätigungselemente erfolgen. Die Umschaltung kann auch automatisch im zeitlichen Verlauf eines Betriebsablaufprogramms oder durch eine Steuerbewegung der Abtastvorrichtung erreicht werden.

Beim Wiederauffindemodus wird die jeweilige Distanz der Abtastvorrichtung (bzw. des Meßtastfingers) zu der aufzufindenden Ausgleichsebene beispielsweise in mm angezeigt. Bei einem dynamischen Unwuchtausgleich kann hierzu beispielsweise zuerst der Abstand zur linken Ausgleichsebene angezeigt werden. Wenn die Abtastvorrichtung beispielsweise mit ihrer Tastspitze bzw. der Schwerpunkt des in der Abtastvorrichtung befestigten Ausgleichsgewichts die gesuchte Ausgleichsebene erreicht hat, ist die Distanzanzeige Null, und diese Anzeige kann noch durch ein beispielsweise akustisches Signal unterstützt werden.

Wenn bei der Bewegung der Abtastvorrichtung (Tastfinger) in Richtung auf die rechte Ausgleichsebene die Mitte zwischen den beiden Ausgleichsebenen überschritten wird, erfolgt eine Distanzanzeige zur rechten Ausgleichsebene, d.h. der Abstand der Abtastvorrichtung zur rechten Ausgleichsebene wird an der Auswuchtmaschine angezeigt. Das Erreichen der rechten Ausgleichsebene kann ebenfalls wiederum sowohl durch die Distanzanzeige Null als auch durch ein akustisches Signal angezeigt werden.

Sobald die jeweilige Ausgleichsebene durch die Abtastvorrichtung bzw. den Schwerpunkt des an der Abtastvorrichtung befestigten Gewichts erreicht ist, kann das Eindrehen des Kraftfahrzeugrades in die Ausgleichsposition (Ausgleichswinkellage) erfolgen. Dies kann in bekannter Weise durch Pfeile unterstützt werden (Hofmann-Betriebsanleitung Radauswuchtmaschine Geodyna 88/88m Impr. 9412145-09.86).

Ferner ist es möglich, die Ausgleichsebene und den wirksamen Durchmesser eines Ausgleichsgewichts, insbesondere Klebegewichts, das an der Felgenschulter oder in der Felgenschüssel (verstecktes Gewicht) anzubringen ist, genau auszumessen. Hierzu werden vor dem Unwuchtmeßvorgang die Innenabmessungen (Innendurchmesser) des Scheibenrades (der Felge) in der jeweiligen Ausgleichsebene in der Weise abgetastet, daß zwischen der Abtastvorrichtung (Abtastspitze, deren jeweilige Positionierung durch die Meß- bzw. Auswerteelektronik wahrgenommen wird) und der abzutastenden Innenabmessung ein Ausgleichsgewicht, z.B. Klebegewicht, angeordnet wird. Hierzu kann das Klebegewicht in eine Haltevorrichtung, welche an der Spitze der Abtastvorrichtung (Taststange, Meßtasthebel) vorgesehen ist, eingesetzt werden. In diesem Fall wird dann das Ausgleichsgewicht als Tastfläche verwendet. Hierdurch wird das Bestimmen der optimalen Ausgleichsebene erleichtert. Die an der Abtastvorrichtung vorgesehene Haltevorrichtung für das Ausgleichsgewicht, insbesondere Klebegewicht, wird zum Ausmessen der optimalen Ausgleichsebene und des wirksamen Durchmessers, mit welchem der Schwerpunkt des einzusetzenden Ausgleichsgewichts wirksam wird, ausgenützt. Mit Hilfe der Abtastvorrichtung wird dabei das Klebegewicht genau in die Ausgleichsebene gebracht, in welcher während des Unwuchtausgleichsvorgangs das durch den Meßvorgang ermittelte Ausgleichsgewicht eingesetzt, insbesondere eingeklebt, werden soll. Dabei wird beim Abtasten nicht die Tastspitze, sondern das in die Haltevorrichtung eingesetzte Gewicht (Bezugsgewicht) als Bezugspunkt herangezogen. Eine entsprechende Schaltungsanordnung, mit der Abmessungen des Ausgleichsgewichts im Hinblick auf die wirksame Schwerpunktlage berücksichtigt werden, ist aus der DE-OS 27 37 524 bekannt. Für die Übernahme der abgetasteten Abmessungen kann die Abtastvorrichtung mit dem aufgesetzten Bezugsgewicht eine bestimmte Zeit, beispielsweise zwei Sekunden, in der gewünschten Position gehalten werden, und durch ein Signal, beispielsweise ein akustisches Signal, kann die Übernahme der abgetasteten Abmessungen im Speicher der Meß- bzw. Auswerteelektronik angezeigt werden. Auf diese Weise können nicht nur durch bestimmte Ausgleichsarten (Gewichteplazierungen) vorgegebene Ausgleichsebenen abgetastet und in die Meßelektronik eingegeben werden, sondern beliebige Ausgleichsebenen, welche ein optimales Positionieren der Ausgleichsgewichte ermöglichen. Bei mehreren vorgegebenen Ausgleichsarten, beispielsweise fünf vorgegebenen Ausgleichsarten, die insbesondere beim Auswuchten von Leichtmetallrädern mit Hilfe von Klebegewichten vorgegeben sind, können Ausgleichsebenen optimal angetastet werden, wobei die anzutastende Stelle durch eine Anzeige, wie im einzelnen noch im Zusammenhang mit dem Unwuchtausgleichsvorgang (Ausgleichsmodus) erläutert wird, kenntlich gemacht wird. Es ist auch hierbei möglich, die Schwerpunktlage des Ausgleichsgewichts mit der jeweiligen Ausgleichsebene in Übereinstimmung zu bringen.

Durch diese Kenntlichmachung der Ausgleichsart erhält die Bedienungsperson einen Hinweis auf die abzutastende Stelle am Scheibenrad, insbesondere im Bereich der Felge des Scheibenrades, sowohl beim Abtasten der Radabmessungen für die Eingabe vor dem Unwuchtmeßvorgang, wie schon erläutert wurde, sondern auch beim Unwuchtausgleichsvorgang durch Einsetzen der Ausgleichsgewichte. Hierzu ist mit der Meßelektronik eine Anzeigeeinrichtung verbunden, die einen Felgenquerschnitt mit den jeweils möglichen Ausgleichsebenen, beispielsweise in Form von Gewichtssymbolen, wiedergibt. Während des Abtastvorgangs (Abtastmodus) wird eine jeweilige für eine ausgewählte Ausgleichsart bestimmte Ausgleichsebene durch ein Signal, beispielsweise durch Blinken des Gewichtssymbols, während des Abtastvorgangs angezeigt. Wenn die Abtastvorrichtung die angezeigte Ausgleichsebene am Kraftfahrzeugrad erreicht, erlischt dann diese Anzeige. Auf diese Weise erhält die Bedienungsperson einen Hinweis auf die an dem Scheibenrad, insbesondere der Felge, anzutastenden Ausgleichsebenen. Es können hierbei fünf separate Ausgleichsebenen, die durch Gewichtssymbole kenntlich gemacht worden sind, abgetastet werden. Die Anzeige der am Kraftfahrzeugrad abzutastenden Ausgleichsebene kann dann beginnen, wenn die Abtastvorrichtung aus ihrer Ruhelage bewegt wird. Es kann dadurch ein Schalter betätigt werden, durch welchen die Anzeige eingeschaltet wird. Diese Anzeige kann beispielsweise ein Blinken des entsprechenden Gewichtssymbols an der abgebildeten Felge bzw. dem abgebildeten Felgenquerschnitt erreicht werden. Es wird immer nur eine Ausgleichsebene durch Blinken eines entsprechenden Gewichts angezeigt. Wenn die kenntlich gemachte Ausgleichsebene von dem Tastfinger der Abtastvorrichtung erreicht wird, kann durch ein akustisches Signal dies kenntlich gemacht werden. Die Anzeige erlischt dann. Falls ein dynamischer Unwuchtausgleich durchgeführt wird, erfolgt die Kenntlichmachung der zweiten Ausgleichsebene in der gleichen Weise. Für die Durchführung des dynamischen Unwuchtausgleichs erfolgt die Anzeige der beiden abzutastenden Ausgleichsebenen somit nacheinander, so daß keine Verwechslungen auftreten können.

Eine erhebliche Erleichterung beim Einsetzen der Ausgleichsgewichte, insbesondere Klebegewichte, beim Ausgleichsmodus ergibt sich für die Bedienungsperson dadurch, daß die Abtastvorrichtung in bestimmten Abtaststellungen fixierbar ist. Insbesondere ist sie dann fixierbar, wenn die Abtastvorrichtung eine jeweilige Ausgleichsebene erreicht hat. Hierbei wird insbesondere die in axialer Richtung (etwa parallel zur Meßspindel der Auswuchtmaschine) erfolgende Bewegung bzw. der axiale Auszug der Abtastvorrichtung blockiert bzw. fixiert. Dies kann mit Hilfe einer Klemmeinrichtung erfolgen, die manuell betätigbar ist oder auch durch die Meßelektronik angesteuert werden kann. Vor allem beim Wiederauffindemodus ergibt sich für die Bedienungsperson eine erhebliche Erleichterung für das Einsetzen der Ausgleichsgewichte. Die Fixierbarkeit bzw. Blockierbarkeit der axialen Bewegung der Abtastvorrichtung (des Meßtastfingers) kann jedoch auch beim Ausmessen und Einspeichern der Scheibenradabmessungen (Abtastmodus) vorteilhaft sein. Die Klemmvorrichtung kann mechanisch ausgebildet sein, indem die Winkelverschwenkbarkeit des Meßtasthebels blockiert wird, beispielsweise in Form einer Klemmschraube, oder in Form einer elektromagnetischen Klemmvorrichtung, wobei letztere bevorzugt zum Einsatz kommt bei der Ansteuerung der Klemmeinrichtung durch die Meßelektronik. Die erleichterte positionsgerechte Anordnung der Ausgleichsgewichte wird nicht nur beim dynamischen Auswuchten, sondern auch beim statischen Auswuchten erreicht.

Durch die Erfindung wird schließlich eine Auswuchtmaschine mit einem Meßtaster einer Abtastvorrichtung geschaffen, dessen Tastfinger auf beliebige Meßpositionen an der Felge gedreht und geschwenkt werden kann, ohne daß eine Parallelverschiebung einer Führungsstange nötig wäre. Durch die spezielle Ausgestaltung des Meßtasthebels mit Zwangsführung des Tastkopfes verbleibt dabei der Tastfinger stets in paralleler Ausrichtung bezüglich der Hauptwelle, so daß mittels der Winkelmeßeinrichtung und einer Auswerteeinrichtung über den Schwenkwinkel die Position von Ausgleichsebenen und gegebenenfalls die Felgenbreite oder andere Maße in Längsrichtung der Hauptwelle exakt bestimmbar sind.

Besonders vorteilhaft ist eine Anordnung, bei der die Längsachse der Haltestange und die Drehachse einer über ein aufgespanntes Rad klappbaren Radschutzhaube übereinstimmen. Die bei der herkömmlichen Abtastvorrichtung nötige eigene Lagerung des Meßtasters in Form der Führungsstange, die aufwendig und teuer ist, entfällt, da die Haltevorrichtung der Radschutzhaube, beispielsweise ein Rohr oder eine drehbare Stange, für die Befestigung des erfindungsgemäßen Meßtasters verwendet wird. Dies ergibt eine kompakte, raumsparende und kostengünstige Gestaltung des Meßtasters.

Der Meßtaster kann eine Rückstelleinrichtung zum Rückstellen der verschwenkten Schwenkarme und/oder des verdrehten Gelenkkopfes aufweisen. Diese Rückstelleinrichtung, die gleichzeitig eine Gewichtsentlastung des Meßtasthebels für eine beispielsweise horizontale Ruhe- oder Ausgangsposition ermöglicht, erleichert die Bedienung, da einem Maschinenbediener das Rückführen des Meßtasters in die geschützte Ausgangsposition abgenommen wird, wodurch auch einer möglichen Beschädigung vorgebeugt werden kann.

In einer vorteilhaften Ausführung enthält die Rückstelleinrichtung eine oder mehrere Federn, beispielsweise eine Schenkelfeder zwischen Gelenkkopf und Meßtasthebel, die die Gewichtsentlastungskraft sowie die Rückstellkraft bereitstellen. Jedoch können auch hydraulische Krafterzeugungseinrichtungen verwendet werden.

Gemäß einem Ausführungsbeispiel kann die Winkelmeßeinrichtung ein mit dem Meßtasthebel gekoppeltes, bogenförmiges Zahnsegment zum Antreiben eines Zahnrades eines Potentiometers aufweisen. Die Teile der Winkelmeßeinrichtung können innerhalb des Gelenkkopfes in gegen Umwelteinflüsse geschützter Lage angeordnet sein.

Der Meßtaster kann linksseitig an der Radschutzhaube und nahe zum Auswuchtmaschinengrundkörper zur Messung der einen Felgenseite oder auf der von der Auswuchtmaschine abgewandten rechten Seite der Radschutzhaube zur Messung der gegenüberliegenden anderen Felgenseite angeordnet sein. Bei linksseitiger Anordnung, beispielsweise an der Haltestange der Radschutzhaube in dem Abstand zwischen Radschutzhaube und Grundkörper der Auswuchtmaschine, ersetzt der erfindungsgemäße Meßtaster den herkömmlichen, am Grundkörper angeordneten und in seiner Funktion beschränkten Meßtaster. Ebenso kann der Meßtaster an dem rechtsseitigen freien Ende der Haltestange zur Messung der bei frontaler Betrachtung rechten Seite einer aufgespannten Radfelge angeordnet sein.

Vorzugsweise enthält die Winkelmeßeinrichtung ein Meßmittel zum Bestimmen der Verdrehung des Gelenkkopfes um die Längsachse der Haltestange. Damit können die Daten oder Koordinaten jedes an der Felge gemessenen Punktes, wie auch der Durchmesser, mittels der bekannten Länge des Meßtasthebels (bzw. der Schwenkarme) sowie den bestimmten Schwenk- und Drehwinkeln bestimmt werden.

Der Meßtaster kann durch eine Steuerung betriebene Antriebsmittel zum Verdrehen des Gelenkkopfes und zum Verschwenken des Meßtasthebels enthalten. Mittels der Antriebsmittel, beispielsweise Elektromotore, die über Zahnräder oder Riemen in bekannter Weise auf Gelenkkopf und Meßtasthebel wirken, können Meßpunkte gezielt angesteuert werden. So kann der Meßtaster bei einem Unwuchtmeßlauf ermittelte Ausgleichspositionen für Ausgleichsgewichte aktiv wiederauffinden, indem der Tastfinger nach Eindrehen des Rades in eine entsprechende Winkelposition auf die Ausgleichsposition gedreht und geschwenkt wird.

Vorzugsweise verfügt der Tastfinger über eine Halterung für ein Ausgleichsgewicht. Der Tastfinger kann so ausgebildet sein wie der im nachfolgenden Ausführungsbeispiel beschriebene Tastfinger, der eine Klemmeinrichtung zur Aufnahme und Positionierung eines Klebegewichtes enthält. Nach Ansteuern einer Ausgleichsposition kann dann das Klebegewicht in seiner Ausgleichsposition angeordnet werden. Dies erhöht die Genauigkeit der Gewichtsanordnung und vermindert die Möglichkeit einer Fehlbetätigung durch den Maschinenbediener.

Der Meßtasthebel kann in unterschiedlichen Ausführungen ausgebildet sein. So kann er vorzugsweise in Form von zwei parallelen Schwenkarmen ausgebildet sein, die einerseits in ihrer Anordnung am Gelenkkopf und andererseits mit der gelenkigen Verbindung durch den Tastkopf ein Parallelogramm bilden, so daß sie eine zur Hauptwelle parallele Führung des Tastfingers ermöglichen. Der Meßtasthebel kann auch einen Bowdenzug aufweisen, der die Führung des Tastfingers zusammen mit dem Meßtasthebel bewerkstelligt. Ebenso kann am Meßtasthebel ein Seil mit einer Druckfeder oder eine Stößelstange mit einer Zugfeder zur hauptwellenparallelen Führung des Tastfingers vorgesehen sein.

Vorzugsweise ist die Haltestange hohl ausgebildet, beispielsweise als ein Rohr, so daß Anschlußleitungen der Winkelmeßeinrichtungen dort hindurchgeführt werden können. Damit sind sie gegen Beschädigung geschützt.

Die Erfindung wird nachfolgend anhand von Ausführungsbeispielen unter Bezugnahme auf Zeichnungen näher erläutert. Es zeigt:
- Fig. 1: in Draufsicht eine schematische Darstellung eines erfindungsgemäßen Meßtasters an einer Auswuchtmaschine;
- Fig. 2: in schematischer Darstellung einen Gelenkkopf des Meßtasters;
- Fig. 3: ein Blockschaltbild einer schematisch dargestellten Abtastvorrichtung mit angeschlossener Auswerteeinrichtung;
- Fig. 4: verschiedene durch die Auswerteeinrichtung darstellbare Ausgleichsarten für den Unwuchtausgleich;
- Fig. 5: verschiedene Möglichkeiten der Abtastung von Kraftfahrzeugradfelgen;
- Fig. 6: schematisch einen Gewichtseinsetzvorgang mit Hilfe der Abtastvorrichtung;
- Fig. 7: in schematischer Darstellung eine Abtastvorrichtung zum Abtasten der Gewichtsabmessungen;
- Fig. 8: in schematischer Darstellung unterschiedliche Ausgestaltungen des Meßtasthebels; und
- Fig. 9: in schematischer Darstellung eine Ausgestaltung des Meßtasthebels mit einer Meßeinrichtung.

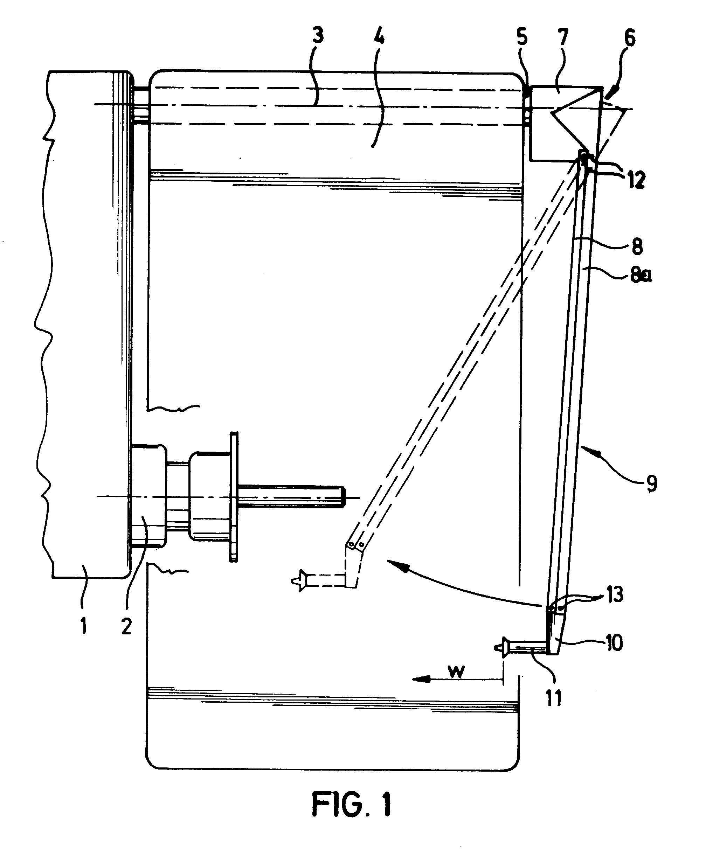

In Fig. 1 ist ein Teil einer Radauswuchtmaschine mit einem Grundkörper 1 und einer Hauptwelle 2, auf die ein auszuwuchtendes Kraftfahrzeugrad (nicht gezeigt) aufspannbar ist, dargestellt. Parallel zur Hauptwelle 2 ist im einem Maschinenbediener abgewandten, hinteren Teil der Auswuchtmaschine eine Drehachse 3 einer Radschutzhaube 4 vorgesehen. Die Drehachse 3 kann als Lagerrohr oder Haltestange 5 ausgebildet sein. Die Radschutzhaube 4 ist um diese Drehachse 3 klapp- oder schwenkbar aus einer nach oben geklappten, offenen Stellung, in der ein aufgespanntes Rad zugänglich ist, in eine herabgeklappte, geschlossene Stellung, in der das Rad bedeckt ist und der Bediener gegen sich bei der Rotation möglicherweise lösende Teile (z. B. Schmutz, im Reifenprofil klemmende Steine oder gelockerte Auswuchtgewichte) geschützt ist.

Auf einem über die Breite der Abdeckhaube 4 herausstehenden Teil der Haltestange 5 ist ein Meßtaster 6 zum Abtasten einer Ausgleichsebene an der Felge oder gegebenenfalls der Felgenabmessungen angeordnet. Der Meßtaster 6 enthält einen Gelenkkopf 7, einen Meßtasthebel 9, der aus zwei parallelen Schwenkarmen 8, 8a gebildet ist, sowie einen Tastkopf 10 mit einem Tastfinger 11. Der Gelenkkopf 7 ist auf der Haltestange 5 in Längsrichtung festgelegt und um die Dreh-bzw. Längsachse 3 drehbar gelagert. Die beiden Schwenkarme 8, 8a sind einerseits am Gelenkkopf 7 um zwei parallele, beabstandete Drehachsen 12, die senkrecht zur Längsachse 3 der Haltestange 5 ausgerichtet sind, schwenkbar befestigt, und andererseits am Tastkopf 10 an zwei parallelen, beabstandeten Drehachsen 13 gelagert, so daß die beiden Schwenkarme 8, 8a in einer durch die Längsachse 3 führenden oder zu dieser parallel verlaufenden oder geneigten Ebene parallelogrammartig verschwenkbar sind. Das bedeutet, daß der Schwenkwinkel der Schwenkarme 8, 8a bezüglich des Gelenkkopfes 7 auf den Tastkopf 10 übertragen wird, so daß der Tastkopf 10 mit dem Tastfinger 11 unabhängig vom jeweiligen Schwenkwinkel in seiner Ausrichtung bezüglich der gemeinsamen Längsachse 3 der Haltestange 5 und somit bezüglich der dazu parallelen Hauptwelle 2 unverändert bleibt, das heißt, die zur Hauptwelle 2 parallele Längsachse des Tastfingers 11 bleibt in paralleler Ausrichtung.

Die Anordnung und der Abstand der jeweiligen beiden Drehachsen 12 bzw. 13 der Schwenkarme 8, 8a am Gelenkkopf 7 bzw. am Tastkopf 10 ist derart gewählt, daß eine auf die Gegebenheiten unterschiedlicher Rad- und Felgengrößen abgestimmte Verschwenkung der Schwenkarme 8, 8a zumindest bis etwa 45° Schwenkwinkel aus der Senkrechten bezüglich der Längsachse 3 der Haltestange 5 ermöglicht wird (in Figur 1 durch die mit strichlierter Darstellung des Meßtasthebels 9 beispielhafte Stellung angedeutet).

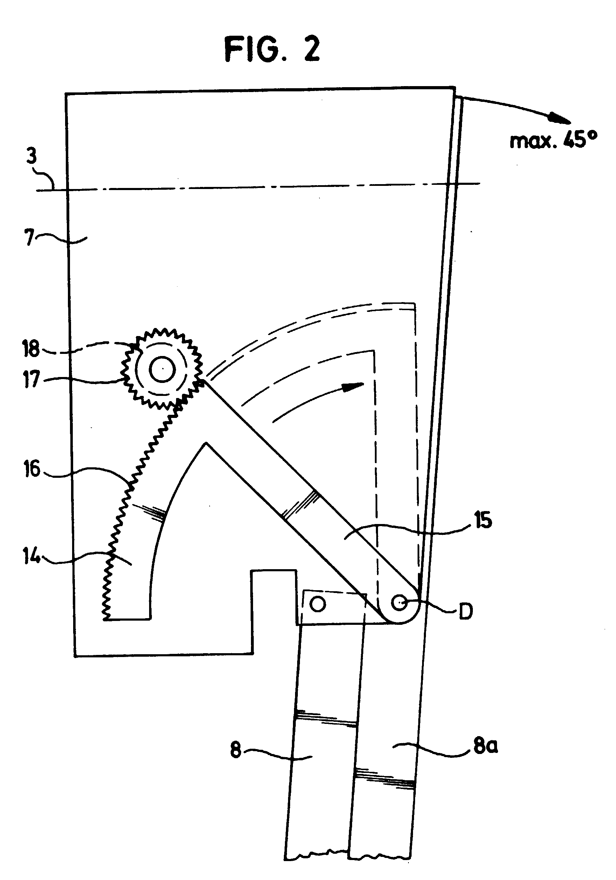

An einem der Schwenkarme 8, 8a (im Ausführungsbeispiel dem rechten Schwenkarm 8a, siehe Fig. 2) ist ein kreisbogenförmiges Zahnsegment 14 über einen Segmenthalter 15 angeordnet. Beide bewegen sich beim Verschwenken der Schwenkarme 8, 8a mit diesen um die gemeinsame Drehachse D. Eine Verzahnung 16 an der Kreisbogenaußenfläche des Zahnsegmentes 14 ist mit einem Zahnrad 17 im Eingriff, das mit einem Drehpotentiometer 18 gekoppelt ist. Der Radius des Zahnsegmentes 14 und der Radius des Zahnrades 17 des Potentiometers 18 sind derart bemessen, daß in dem Ausführungsbeispiel der Schwenkwinkel des Schwenkarmes 8a mit einer Übersetzung von i = 7,12 auf das Potentiometer 18 übertragen wird. Durch eine bekannte, hier nicht näher erläuterte Auswerteeinrichtung wird über am Potentiometer 18 erzeugte elektrische Signale, die bestimmten Schwenkwinkeln entsprechen, der zur Hauptwelle 2 parallele Meßweg w mittels einfacher geometrischer Beziehungen errechnet. Mit dem Meßweg w kann die Lage einer Ausgleichsebene und gegebenenfalls die Breite einer Felge bestimmt werden.

Zwischen den beiden Schwenkarmen 8, 8a oder zwischen dem Gelenkkopf 7 und dem (den) Schwenkarm(en) 8, 8a kann mindestens eine Feder angeordnet sein, die gegen eine Ausrichtung der Schwenkarme 8, 8a aus einer Ausgangsposition, beispielsweise der Senkrechten, wirkt. Dann schwenken die Schwenkarme 8, 8a nach Antasten eines Meßpunktes (beispielsweise des rechten Felgenhorns oder einer Ausgleichsebene) mit dem Tastfinger 11 federbetätigt wieder in ihre Ausgangslage zurück.

Die um die Längsachse 3 der Haltestange 5 drehbare Anordnung des Gelenkkopfes 7 ermöglicht eine Drehung des Tastkopfes 10 auf Kreisbahnen in zu der Längsachse 3 senkrechten Ebenen, wobei der Radius der Kreisbahnen vom jeweiligen Schwenkwinkel der Schwenkarme 8, 8a abhängt. Somit ist gewährleistet, daß der Tastfinger 11 am Felgenhorn oder anderen Punkten der Felge auch bei unterschiedlichen Felgenbreiten und -durchmessern mittels Schwenk- und Drehbewegung positioniert werden kann.

Des weiteren ist am Gelenkkopf 7 eine nicht dargestellte zweite Winkelmeßeinrichtung angeordnet, die den Winkel der Verdrehung des Gelenkkopfes 7 um die Längsachse 3 der Haltestange 5 mißt. Zu diesem Zweck kann die zweite Winkelmeßeinrichtung eine Zahnräder- und Potentiometeranordnung aufweisen, die analog der für den Schwenkwinkel beschriebenen Winkelmeßeinrichtung aufgebaut ist. Jedoch sind auch andere, dem Fachmann bekannte Meßeinrichtungen zur Bestimmung des Dreh- und des Schwenkwinkels möglich. Damit kann jeder Meßpunkt an der Felge exakt bestimmt werden. Die Meßpunktdaten bzw. Meßpunktkoordinaten können in einem Meßwertspeicher gespeichert werden.

In Verbindung mit den obengenannten Antriebsmitteln zum Verdrehen des Gelenkkopfes und zum Verschwenken der Schwenkarme sowie mit dem Tastfinger als Halterung für ein Ausgleichsgewicht kann die Gewichtsanordnung beim Auswuchtvorgang mit erhöhter Genauigkeit ausgeführt werden, und der Maschinenbediener wird somit bei seiner Tätigkeit vorteilhaft unterstützt.

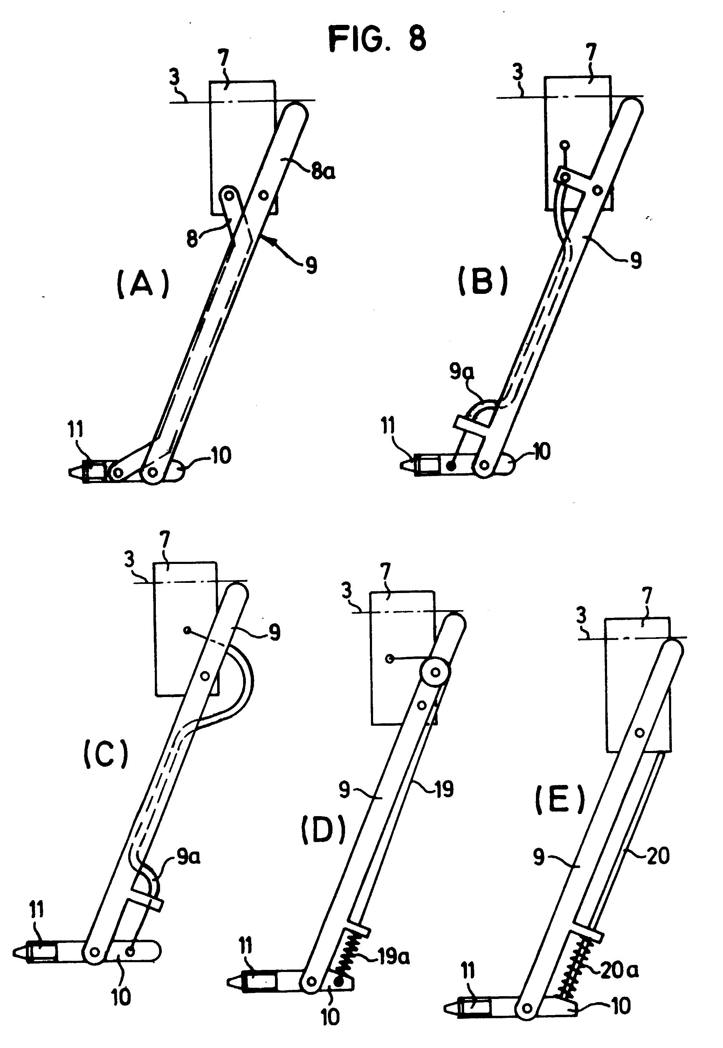

In den Fig. 8 (A) bis (E) sind alternative Ausgestaltungen des Meßtasthebels 9 des erfindungsgemäßen Meßtasters dargestellt.

Fig. 8 (A) zeigt zwei Schwenkarme 8, 8a des Meßtasthebels 9, wobei der eine Schwenkarm 8 im anderen Schwenkarm 8a, beispielsweise als U-Rohr ausgebildet, versenkt angeordnet ist.

Fig. 8 (B) zeigt einen Meßtasthebel 9, an dem ein Bowdenzug 9a angebracht ist. Der Innendraht des Bowdenzugs 9a ist einerseits am Gelenkkopf 7, andererseits am Tastkopf 10 befestigt, so daß der Tastfinger 11 beim Schwenken des Meßtasthebels 9 in beschriebener Weise hauptwellenparallel gehalten wird.

Fig. 8 (C) zeigt einen Meßtasthebel 9 gemäß Fig. 8 (B), jedoch mit abgewandelter Anordnung des Bowdenzugs 9a. Die Funktion wird in gleicher Weise erfüllt.

Fig. 8 (D) zeigt einen Meßtasthebel 9, über den ein am Gelenkkopf 7 und am Tastkopf 10 befestigtes Seil 19 geführt wird. Die Führung des Tastfingers 11 wird durch eine zwischen Meßtasthebel 9 und Tastkopf 10 angeordnete Druckfeder 19a erzielt.

Fig. 8 (E) zeigt einen Meßtasthebel 9 mit einer Stößelstange 20 und einer Zugfeder 20a zur Führung des Tastfingers 11.

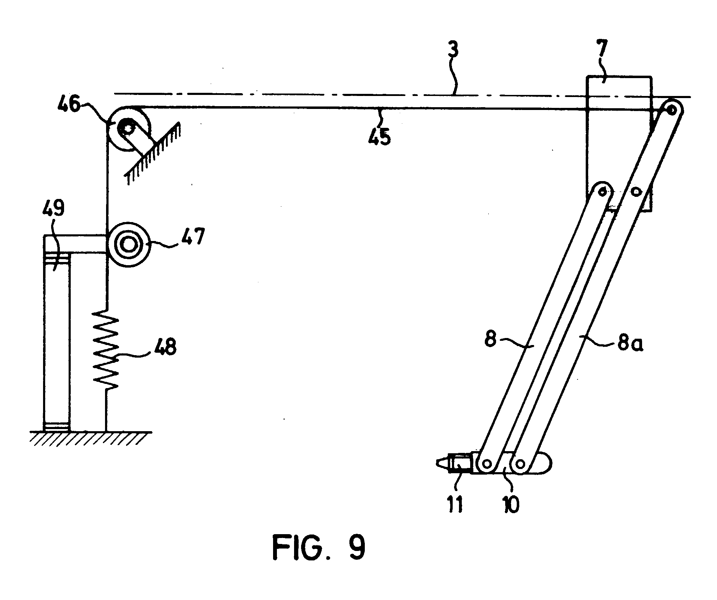

In Fig. 9 ist ein Meßtasthebel 9 in Form zweier Schwenkarme 8, 8a dargestellt, wobei ein an einem Schwenkarm 8a befestigtes Seil 45 parallel zur Drehachse 3, über eine Umlenkrolle 46, über eine einmal umschlungene Seilrolle 47, die mit einem Potentiometer gekoppelt ist, verläuft und mit einer Zugfeder 48 verbunden ist. Beim Verschwenken des Meßtasthebels 9 wird, das Seil 45 und somit die Seilrolle 47 bewegt, so daß mittels des Potentiometers und einer Auswerteschaltung der Schwenkwinkel des Meßtasthebels 9 bestimmt werden kann. Die Seilrolle 47 und das Potentiometer sind über zwei parallele Blattfedern 49 gehalten.

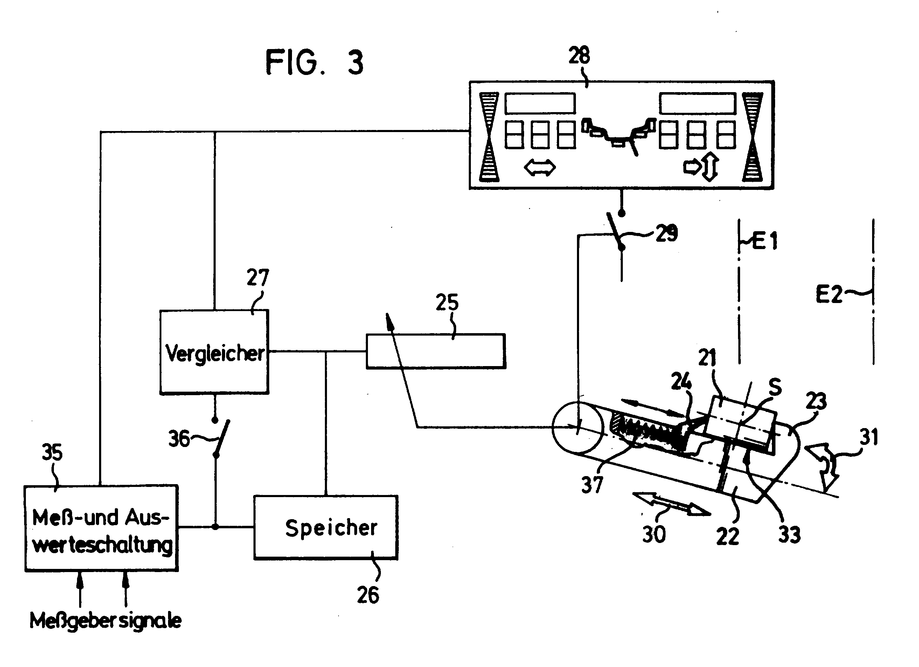

Anhand eines Ausführungsbeispiels wird nun das Verfahren zum Unwuchtausgleich beschrieben. In Figur 3 ist schematisch eine Abtastvorrichtung in Form eines ausziehbaren bzw. in Richtung des Doppelpfeils 30 bewegbaren und schwenkbaren (Doppelpfeil 31) Tastfingers 22 mit einer Tastspitze 23 dargestellt. Für die Schwenkbewegung kann der Tastfinger 22 zusätzlich am Tastkopf 10 (vgl. Fig. 1) schwenkbar gelagert sein, um aus seiner hauptwellenparallelen Ausrichtung geschwenkt werden zu können (beispielsweise zum Anbringen von Klebegewichten an geneigten Felgenflächen). Zur Positionserkennung ist der Tastfinger 22 mit einer Positionserkennungseinrichtung 25 verbunden. Die Positionserkennungseinrichtung 25 erzeugt elektrische Positionserkennungssignale, die proportional der jeweiligen Auszugslänge bzw. einer Bewegung über den Weg w (Doppelpfeil 30) und der Schwenklage (Doppelpfeil 31) des Tastfingers 22 sind. Die von der Positionserkennungseinrichtung 25 abgegebenen Signale sind proportional der jeweiligen Positionierung der Tastspitze 23 des Tastfingers 22. In der älteren deutschen Patentanmeldung P 41 22 844.8 ist eine detaillierte Beschreibung einer verwendbaren Abtastvorrichtung mit Positionserkennung beschrieben. Ebenso kann die vorangehend beschriebene Abtastvorrichtung mit Meßeinrichtung zur Positionsbestimmung verwendet werden. Die Positionserkennungseinrichtung 25 kann ein Potentiometer zur Erkennung der Schwenkwinkellage (Pfeil 31) und ein Potentiometer zur Erkennung des zur Hauptwelle parallelen Weges der Bewegung (Pfeil 30) aufweisen. Die von dem Potentiometer erzeugte Analogsignale können nach Digitalisierung gespeichert werden.

Die dargestellte Abtastvorrichtung kann nicht nur zum Abtasten eines Scheibenrads, insbesondere im Felgenbereich, beim Abtastmodus verwendet werden, sondern dient durch den Wiederauffindemodus außerdem zur Erleichterung der positionsgerechten Anordnung von Ausgleichsgewichten am Scheibenrad nach Durchführung des Unwuchtmeßvorgangs, wie im einzelnen noch erläutert wird.

Hierzu ist an die Positionserkennungseinrichtung 25 ein Speicher 26 angeschlossen. Dieser Speicher 26 ist Bestandteil der Meß- bzw. Auswerteelektronik 35 (z.B. bekannt aus Hofmann-news 5, Impressum 09.85D), in denen Meßgebersignale, welche beim Unwuchtmeßvorgang in den Meßläufen erhalten werden, ausgewertet werden. Die ausgewerteten Meßgebersignale werden dann in Form von Größen- und Winkelangaben für die am Kraftfahrzeugrad einzusetzenden Ausgleichsgewichte von einer Anzeigeeinrichtung 28 angezeigt. Sowohl an den Speicher 26 als auch an die Positionserkennungseinrichtung 25 ist ein Vergleicher 27 angeschlossen, der mit der Anzeigeeinrichtung 28 verbunden ist.

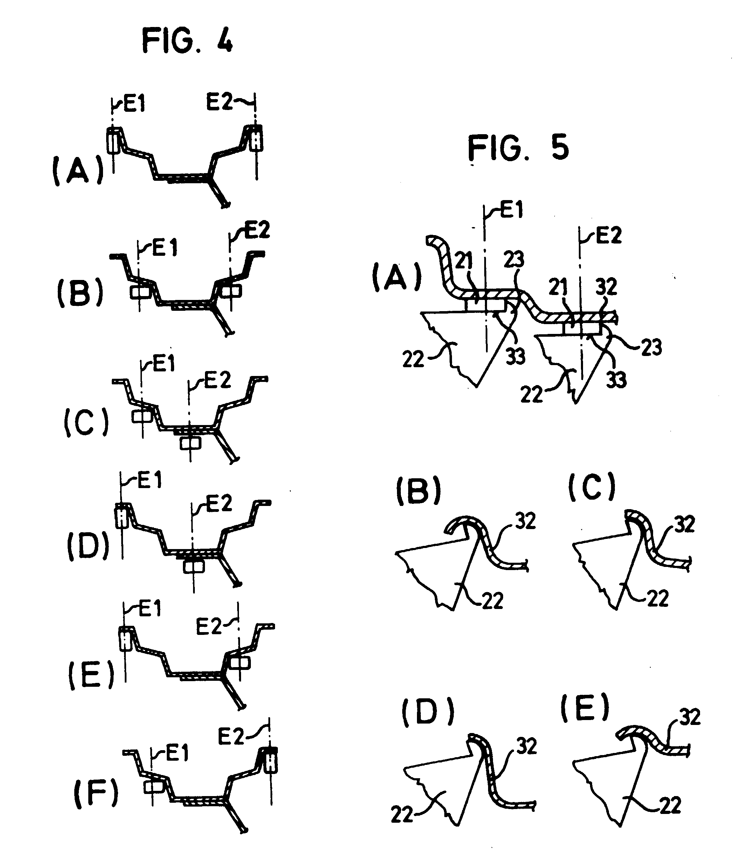

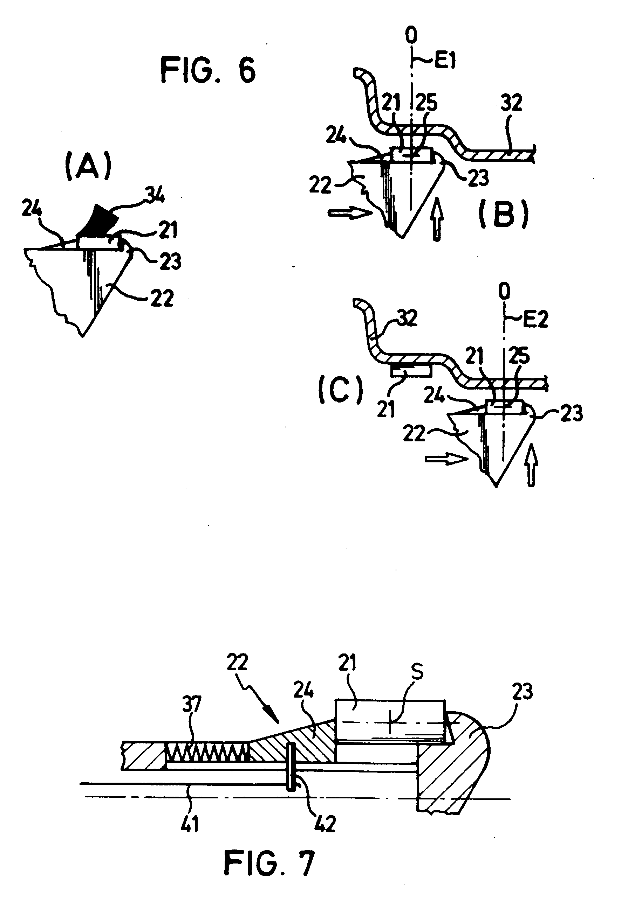

Der Tastfinger 22 besitzt einen mit einer Feder 37 beaufschlagten Gewichthalter 24 in Form einer Greiferklaue zum Festhalten eines Ausgleichsgewichts 21 am Tastfinger 22 zwischen Greiferklaue und Tastspitze 23. Vor Durchführung des Unwuchtmeßvorgangs wird die Felge des Kraftfahrzeugrades im Bereich der Ausgleichsebenen E1, E2 (strichpunktiert dargestellt in den Figuren) abgetastet. Wenn es sich beispielsweise um eine Leichtmetallfelge eines Standardkraftfahrzeugrades handelt, an welchem Klebegewichte angeordnet werden sollen, kann man die in der Figur 5 (A) gezeigte Abtastung an der Felge 32 vornehmen. Dabei ist zu berücksichtigen, daß die Abtastspitze 23 nicht exakt mit dem Schwerpunkt S des einzusetzenden Ausgleichsgewichtes 21 übereinstimmt. Dieser Schwerpunkt S muß jedoch für einen genauen Ausgleichsvorgang in der jeweiligen Ausgleichsebene E1 bzw. E2 liegen. Um hier eine genaue Abtastung zu erreichen, wird mit Hilfe des Gewichthalters 24 in den Tastfinger 22 ein Ausgleichsgewicht 21 als Bezugsgewicht eingesetzt. Die Abmessungen des eingesetzten Ausgleichsgewichts 21 und die Lage des Schwerpunkts S des Ausgleichsgewichts 21, insbesondere der Abstand des Schwerpunkts von der Auflagekante 33 (Figur 1) und der Abstand des Schwerpunktes S von der Tastspitze 23 sind bekannte Größen.
Unterschiedliche Abmessungen der Ausgleichsgewichte in der Bewegungsrichtung (Pfeil 30 in Figur 3) und Verlagerungen des Schwerpunkts in dieser Richtung lassen sich mit einer in Figur 7 dargestellten Abtastvorrichtung ermitteln und an die Positionserkennungseinrichtung 25 weitergeben. Aus der DE-OS 27 37 524 ist es bekannt, wie in der Positionserkennungseinrichtung 25 diese Abmessungen für eine richtige Ebenenbestimmung zu berücksichtigen sind. Für den Fall, daß eine Ausgleichsart nach Figur 4 (C) gewählt werden soll, ist eine entsprechende Abtastung der Ausgleichsebenen E1 und E2 möglich. Die entsprechenden Positionierungen des Tastfingers 22 werden von der Einrichtung 25 erkannt und proportionale Signale in digitaler Form in den Speicher 26 eingegeben. Diese die Positionen der Ausgleichsebenen E1 und E2 sowie die Radien der Positionen der Ausgleichsgewichte in den Ausgleichsebenen angebenden Daten werden bei der Auswertung der von den nicht näher dargestellten Meßgebern während des Unwuchtmeßvorgangs gelieferten Meßgebersignale in der Meß- und Auswerteelektronik 35 mit berücksichtigt.

Bei Stahlfelgen von Standardrädern wird beispielsweise die in der Figur 5 (B) gezeigte Felgenabtastung vorgenommen. Bei Leichtmetallfelgen von Standardrädern wird beispielsweise die in der Figur 5 (C) dargestellte Abtastung der Radfelge vorgenommen. Bei Flachbett- bzw. Tiefbettfelgen wird beispielsweise die in der Figur 5 (D) dargestellte Abtastung vorgenommen. Bei Stahlfelgen von Steilschulterrädern wird beispielsweise die in der Figur 5 (E) dargestellte Abtastung vorgenommen. Die in den Figuren 5 (B) bis (E) dargestellten Abtastungen sind die Abtastungen in den linken Ausgleichsebenen. Die Lage der rechten Ausgleichsebene läßt sich mit Hilfe des erfindungsgemäßen Meßtasters bestimmen. Bei dem zur Abtastung der Felge in der Figur 5 (A) gezeigten Ausgleichsgewicht kann es sich um ein Klebegewicht handeln, das mit der Schutzfolie nach oben auf die Auflagefläche 33 des Tastfingers 22 aufgelegt wird. Die Tastspitze 23 mit dem eingelegten Ausgleichsgewicht 21 wird für eine bestimmte Zeit, beispielsweise zwei Sekunden, in der Abtaststellung gehalten, um genügend Zeit für die Meßwertübernahme in den Speicher 26 vorzusehen. Diese Stillhaltezeit kann bedarfsgemäß eingestellt werden.

Wenn für bestimmte Ausgleichsarten die Positionierung der Ausgleichsgewichte in bestimmen Ebenen an der Felge vorgegeben ist, läßt sich das Abtasten der Felgenabmessungen für die Bedienungsperson weiterhin erleichtern. In der Figur 4 sind verschiedene Ausgleichsarten für Standardfelgen dargestellt.

In der Figur 4 (A) ist eine normale Gewichteplazierung an den Felgenhörnern dargestellt. In aller Regel handelt es sich hier um Federgewichte, die in die Felgenhörner geklemmt werden.

In der Figur 4 (B) ist die symmetrische Anbringung von Klebegewichten an Felgenschultern gezeigt.

In der Figur 4 (C) ist ein Anbringen von Klebegewichten gezeigt, bei dem ein verstecktes Klebegewicht in der Felgenschüssel angebracht wird, um das attraktive Erscheinungsbild des Kraftfahrzeugrades, insbesondere Leichtmetallrades, nicht zu stören.

Bei dem in der Figur 4 (D) dargestellten Ausgleichsart wird ein Federgewicht am linken Felgenhorn und ein Klebegewicht in der Felgenschüssel angebracht.

Bei der in der Figur 4 (E) dargestellten Ausgleichsart wird ein Federgewicht am linken Felgenhorn und ein Klebegewicht an der rechten Felgenschulter angebracht.

Bei der in der Figur 4 (F) dargestellten Ausgleichsart wird ein Federgewicht am rechten Felgenhorn und ein Klebegewicht an der linken Felgenschulter vorgesehen.

Diese zur Gewichteplazierung vorhandenen Möglichkeiten (Ausgleichsarten) können an der Anzeigeeinrichtung 28 durch Wiedergabe der in der Figur 4 dargestellten Felgensymbole mit den durch schematisch dargestellte Ausgleichsgewichte gekennzeichneten Ausgleichsebenen E1 und E2 angezeigt werden. Die verschiedenen Ausgleichsarten (Gewichteplazierungen) (A) bis (F) können separat angezeigt werden. Die durch den Tastfinger 22 abzutastenden Ausgleichsebenen E1 und E2 können dann durch Sichtbarmachen, beispielsweise durch Blinken der Gewichtesymbole, welche die Lage der Ausgleichsebenen E1 und E2 angeben, kenntlich gemacht werden. Die Bedienungsperson weiß dann, welche Stellen der Felge des eingespannten Kraftfahrzeugrades mit dem Tastfinger abzutasten sind. Es blinkt immer nur ein Gewichtssymbol, welches die am eingespannten Kraftfahrzeugrad abzutastende Ausgleichsebene anzeigt. Wenn diese Ausgleichsebene abgetastet ist und die entsprechenden Daten im Speicher 26 abgelegt sind, blinkt das Gewichtssymbol für die zweite Ausgleichsebene.

Um diese Betriebsart (Figur 6) einzuschalten, kann ein Schalter 29 betätigt werden, der dann geschlossen wird und das Blinken des entsprechenden Gewichtssymbols veranlaßt, wenn der Tastfinger 22 aus seiner Ruhelage bewegt wird.

Unter Bezugnahme auf die Figur 6 wird die Betriebsart des Wiederauffindens (Wiederauffindemodus) der zuvor im Abtastmodus ausgemessenen Ausgleichsebenen E1 und E2 anhand der in Figur 4 (C) dargestellten Ausgleichsart erläutert. Ein Ausgleichsgewicht 21, das als Klebegewicht ausgebildet ist, wird am Tastfinger 22 mit Hilfe des federbeaufschlagten Halters 24 zwischen Greiferklaue und aufwärts gebogener Tastspitze 23 befestigt und die oben liegende Schutzfolie 34 wird abgezogen (Figur 6 A). Die Tastspitze 23 wird an die Felge 32 herangeführt, wobei der Abstand des Tastfingers 22 von der jeweiligen Ausgleichsebene E1 bzw. E2 an der Anzeigeeinrichtung 28 angezeigt wird. Sobald das Ausgleichsgewicht 21 bzw. dessen Schwerpunkt S bis in eine der beiden Ebenen, beispielsweise die linke Ausgleichsebene E1, herangeführt ist, ertönt ein akustisches Signal, welches dem Bediener anzeigt, daß das Gewicht bis in die Ausgleichsebene gebracht ist. Gleichzeitig erfolgt die Abstandsanzeige Null (Figur 6 B).

Das Klebegewicht wird dann mit Hilfe des Gewichthalters an die Felge 32 herangeführt und angedrückt. Der Tastfinger 22 wird von dem an die Felge 32 angehefteten Ausgleichsgewicht 21 gelöst und in die Ausgangsposition zurückgebracht. Dort wird ein zweites Ausgleichsgewicht 21 am Tastfinger 22 eines zweiten Meßtasters für die rechte Felgenseite befestigt, und der gleiche Vorgang wiederholt sich für das Einsetzen des Ausgleichsgewichtes 21 in der rechten Ausgleichsebene E2. Wie aus den Figuren 6 (B) und (C) zu ersehen ist, werden die Ausgleichsgewichte 21 in solchen Positionen an der Felge 32 befestigt, daß ihre Schwerpunkte S in den vorher ausgemessenen Ausgleichsebenen E1 und E2 liegen. Zur Einschaltung der Betriebsart des Wiederauffindens der jeweiligen Ausgleichsebene beim Ausgleichsvorgang kann ein Schalter 36 betätigt werden. Dieser Schalter kann manuell oder automatisch durch ein Ablaufprogramm oder auch durch eine bestimmte Steuerbewegung des Tastfingers 22 betätigt werden.

In Figur 7 ist eine Abtastvorrichtung zur Abtastung der Abmessungen des Ausgleichsgewichts 21 in Auszugsrichtung oder in Bewegungsrichtung des Tastfingers 22 (Pfeilrichtung 30) dargestellt. Das Ausgleichsgewicht ist zwischen die Abtastspitze 23 und den Halter 24 durch die Kraft der Feder 37 eingeklemmt. Am Halter 24, der am Tastfinger 22 in dessen axialer Richtung verschiebbar ist, ist ein Befestigungsstift 42 befestigt. Am Befestigungsstift 42 ist eine Schnur 41 oder ein Zugdraht befestigt, der mit einem Potentiometer zur Ermittlung der Auszugs- oder Weglänge in der Positionserkennungseinrichtung 25 verbunden ist. Wenn sich die axialen Abmessungen des Ausgleichsgewichts 21 ändern, verschiebt sich auch der Schwerpunkt S entsprechend. Dies kann durch die dargestellte Abtastvorrichtung mitberücksichtigt werden. Dabei beträgt die jeweilige Schwerpunktverschiebung die Hälfte der jeweiligen Abmessungsänderung zwischen dem Halter 24 und der Abtastspitze 23. Beim dargestellten Ausführungsbeispiel ist der Befestigungsstift 42 starr mit dem Halter 24 verbunden. Es ist jedoch auch möglich, den Befestigungsstift 42 als Hebel auszubilden, der in Abhängigkeit von der Abmessung des Ausgleichsgewichts entsprechend verschwenkt wird. Diese Schwenkbewegung wird dann ebenfalls auf die Schnur 41 übertragen. Dabei kann das Übersetzungsverhältnis so gewählt werden, daß die oben angesprochene Schwerpunktverschiebung, welche der Hälfte der jeweiligen Abmessungsänderung in axialer Richtung entspricht, in mechanischer Weise berücksichtigt ist. Beim starren Stift kann dies durch einen entsprechenden Rechenvorgang in der Auswerteelektronik oder in der Positionserkennungseinrichtung 25 berücksichtigt werden.

## Patentansprüche

1. Verfahren zum Unwuchtausgleich an einem Kraftfahrzeugrad mit Hilfe von wenigstens einem Ausgleichsgewicht (21), insbesondere Klebegewicht, das in bestimmten durch eine Meßelektronik (35) während eines Unwuchtmeßvorganges ermittelten Positionen am Scheibenrad bzw. der Felge (32) des Kraftfahrzeugrades befestigt wird,
wobei beim Unwuchtausgleichsvorgang zur positionsgerechten Anordnung des jeweiligen Ausgleichsgewichts (21) am Scheibenrad bzw. der Felge (32) eine mit der Meßelektronik gekoppelte Abtastvorrichtung verwendet wird, mit der zur Auswertung der beim Unwuchtmeßvorgang erhaltenen Meßwerte mindestens eine Scheibenradabmessung für eine Einspeicherung in die Meß- bzw. Auswerteelektronik (35) abgetastet wird,
wobei mit der Abtastvorrichtung zur Meßwerteauswertung die jeweilige Ausgleichsebene, in welcher das Ausgleichsgewicht (21) für den Unwuchtausgleich eingesetzt wird, abgetastet und die entsprechende Ausgleichsebenenposition in die Meßelektronik (35) eingespeichert wird, und wobei die Abtastvorrichtung einen Meßtaster (6) mit Tastfinger (11) aufweist, der einen Gelenkkopf (7), der an einer in Längsrichtung festgelegten Haltestange (5) um ihre Längs bzw. Drehachse (3) drehbar angeordnet ist, einen am Gelenkkopf (7) schwenkgelagerten Meßtasthebel (9) mit einem zwangsgeführten Tastkopf (10) und eine am Gelenkkopf (7) angeordnete Winkelmeßeinrichtung aufweist, die den Schwenkwinkel des Meßtasthebels (9) bezüglich des Gelenkkopfes (7) erfaßt
**dadurch gekennzeichnet**,
dass der am Tastkopf (10) angeordnete Tastfinger (11) bei einer Schwenkbewegung des Meßtasthebels (9) in paralleler Ausrichtung zur Hauptwelle (2) auf ein abzutastendes Rad zu und von ihm weg bewegbar ist, und daß zum Wiederauffinden der jeweiligen Ausgleichsebene beim Anbringen des Ausgleichsgewichts (21) am Scheibenrad die Abtastvorrichtung bewegt wird und dabei der Abstand der Abtastvorrichtung von der jeweiligen Ausgleichsebene angezeigt wird.

2. Verfahren nach Anspruch 1, dadurch gekennzeichnet, daß beim Erreichen der jeweiligen Ausgleichsebene, in die das Ausgleichsgewicht (21) eingesetzt wird, ein Signal durch die Meßelektronik (35) erzeugt wird.

3. Verfahren nach Anspruch 1 oder 2, dadurch gekennzeichnet, daß zum Abtasten der Ausgleichsebene und des wirksamen Durchmessers des eingesetzten Ausgleichsgewichts (21) für die Meßwerteauswertung die Innenabmessung des Scheibenrades in der jeweiligen Ausgleichsebene mit zwischen der Abtastvorrichtung und der Innenabmessung angeordnetem Ausgleichsgewicht abgetastet wird.

4. Verfahren nach einem der Ansprüche 1 bis 3, dadurch gekennzeichnet, daß durch eine mit der Meßelektronik (35) verbundene Anzeigeeinrichtung ein Felgenquerschnitt mit den jeweils möglichen Ausgleichsebenen angezeigt wird, daß eine jeweilige für eine ausgewählte Ausgleichsart bestimmte Ausgleichsebene durch ein Signal während des Abtastvorganges angezeigt wird und nach dem Abtasten der angezeigten Ausgleichsebene am zu messenden Kraftfahrzeugrad die Anzeige zum Erlöschen gebracht wird.

5. Verfahren nach Anspruch 4, dadurch gekennzeichnet, daß die Anzeige der am Kraftfahrzeugrad abzutastenden Ausgleichsebene dann beginnt, wenn die Abtastvorrichtung aus ihrer Ruhelage bewegt wird.

6. Verfahren nach Anspruch 4 oder 5, dadurch gekennzeichnet, daß zur Durchführung eines dynamischen Unwuchtausgleichs die Anzeige der beiden abzutastenden Ausgleichsebenen nacheinander erfolgt.

7. Verfahren nach einem der Ansprüche 1 bis 6, dadurch gekennzeichnet, daß die Abtastvorrichtung in ihrer jeweiligen Abtaststellung fixiert wird.

8. Verfahren nach Anspruch 7, dadurch gekennzeichnet, daß die Abtastvorrichtung manuell fixiert wird.

9. Verfahren nach Anspruch 7, dadurch gekennzeichnet, daß die Abtastvorrichtung durch die Meßelektronik (35) gesteuert fixiert wird.

10. Verfahren nach einem der Ansprüche 7 bis 9, dadurch gekennzeichnet, daß bei fixierter Abtastvorrichtung das Kraftfahrzeugrad in die Ausgleichswinkellage gedreht wird.

11. Verfahren nach einem der Ansprüche 1 bis 10, dadurch gekennzeichnet, daß zwischen dem Abtastmodus und Wiederauffindemodus umgeschaltet wird.

12. Verfahren nach einem der Ansprüche 1 bis 11, dadurch gekennzeichnet, daß sowohl beim Abtastmodus als auch beim Wiederauffindemodus ein Ausgleichsgewicht (21) in die Abtastvorrichtung eingesetzt wird und daß die beim Unwuchtausgleich wirksame Schwerpunktlage des Ausgleichsgewichts beim Abtasten und Wiederauffinden der Ausgleichsebene verwendet wird.

13. Vorrichtung zum Unwuchtausgleich an einem Kraftfahrzeugrad mit Hilfe von wenigstens einem Ausgleichsgewicht (21), insbesondere Klebegewicht, das in bestimmten, durch eine Meßelektronik (35) mit einer Anzeigeeinrichtung während eines Unwuchtmeßvorganges ermittelten Positionen an der Felge (32) des Kraftfahrzeuges befestigt wird, wobei für den Unwuchtausgleichsvorgang zur positionsgerechten Anordnung des jeweiligen Ausgleichsgewichtes (21) an der Felge (32) eine mit der Meßelektronik (35) gekoppelte Abtastvorrichtung mit einer Positionserkennungseinrichtung (25) vorgesehen ist, mit der zur Auswertung der beim Unwuchtmeßvorgang erhaltenen Meßwerte mindestens eine Radabmessung für eine Einspeicherung in einen Speicher (26) der Meßelektronik abtastbar ist, wobei mit der Abtastvorrichtung zur Meßwerteauswertung die jeweilige Ausgleichsebene, in welcher das Ausgleichsgewicht (21) für den Unwuchtausgleich eingesetzt wird, abgetastet und die entsprechende Ausgleichsebenenposition in die Meßelektronik (35) einspeicherbar ist, und wobei die Abtastvorrichtung einen Meßtaster (6) mit Tastfinger (11) aufweist, der einen Gelenkkopf (7), welcher an einer in Längsrichtung festgelegten Haltestange (5) um deren Längsachse drehbar angeordnet ist, einen Meßtasthebel (9) mit einem zwangsgeführten Tastkopf (10) und eine am Gelenkkopf (7) angeordnete Winkelmeßeinrichtung aufweist, die den Schwenkwinkel des Meßtasthebels (9) bezüglich des Gelenkkopfes (7) erfaßt,
**dadurch gekennzeichnet,**
daß der Meßtasthebel (9) am Gelenkkopf (7) schwenkbar so gelagert ist, daß der am Tastkopf (10) angeordnete Tastfinger (11) bei einer Schwenkbewegung des Meßtasthebels (9) in paralleler Ausrichtung zur Hauptwelle (2) auf das abzutastende Kraftfahrzeugrad zu und von ihm wegbewegbar ist; und
mit dem Speicher (26) und der Positionserkennungseinrichtung (25) ein Vergleicher (27) verbunden ist, der an die Anzeigeeinrichtung (28) angeschlossen ist, wobei zum Wiederauffinden der jeweiligen Ausgleichsebene beim Anbringen des Ausgleichsgewichtes (21) an der Felge (32) die Abtastvorrichtung bewegbar und dabei der Abstand der Abtastvorrichtung von der jeweiligen Ausgleichsebene anzeigbar ist.

14. Vorrichtung nach Anspruch 13, dadurch gekennzeichnet, daß beim Erreichen der jeweiligen Ausgleichsebene die Meßelektronik (35) ein Signal erzeugt.

15. Vorrichtung nach Anspruch 13 oder 14, dadurch gekennzeichnet, daß eine mit der Meßelektronik (35) verbundene Anzeigeeinrichtung für eine Darstellung des Felgenquerschnittes mit den jeweils möglichen Ausgleichsebenen vorgesehen ist, wobei eine jeweilige für eine ausgewählte Ausgleichsart bestimmte Ausgleichsebene durch ein Signal während des Abtastvorganges anzeigbar ist, die nach dem Abtasten der angezeigten Ausgleichsebene am zu messenden Kraftfahrzeugrad erlischt.

16. Vorrichtung nach Anspruch 15, dadurch gekennzeichnet, daß die Anzeige der am Kraftfahrzeugrad abzutastenden Ausgleichsebene dann erscheint, wenn die Abtastvorrichtung aus ihrer Ruhelage bewegt wird.

17. Vorrichtung nach Anspruch 15 oder 16, dadurch gekennzeichnet, daß zur Durchführung eines dynamischen Unwuchtausgleichs die Anzeige der beiden abzutastenden Ausgleichsebenen nacheinander erfolgt.

18. Vorrichtung nach einem der Ansprüche 13 bis 17, dadurch gekennzeichnet, daß die Abtastvorrichtung in ihrer jeweiligen Abtaststellung fixierbar ist.

19. Vorrichtung nach Anspruch 18, dadurch gekennzeichnet, daß die Abtastvorrichtung manuell fixierbar ist.

20. Vorrichtung nach Anspruch 18, dadurch gekennzeichnet, daß die Abtastvorrichtung durch die Meßelektronik (35) gesteuert fixierbar ist.

21. Vorrichtung nach einem der Ansprüche 18 bis 20, dadurch gekennzeichnet, daß bei fixierter Abtastvorrichtung das Kraftfahrzeugrad in die Ausgleichswinkellage drehbar ist.

22. Vorrichtung nach einem der Ansprüche 13 bis 21, dadurch gekennzeichnet, daß eine Umschaltmöglichkeit zwischen dem Abtastmodus und dem Wiederauffindemodus vorgesehen ist.

23. Vorrichtung nach einem der Ansprüche 13 bis 22, dadurch gekennzeichnet, daß sowohl beim Abtastmodus als auch beim Wiederauffindemodus ein Ausgleichsgewicht (21) in die Abtastvorrichtung eingesetzt ist, wobei die beim Unwuchtausgleich wirksame Schwerpunktlage des Ausgleichsgewichts (21) beim Abtasten für die Ermittlung der Unwuchtausgleichswerte und beim Wiederauffinden der Ausgleichsebene verwendet wird.

24. Vorrichtung nach einem der Ansprüche 13 bis 23, dadurch gekennzeichnet, daß die Längs- bzw. Drehachse (3) der Haltestange (5) und die Drehachse (3) einer über ein ausgespanntes Rad klappbaren Radschutzhaube (4) übereinstimmen.

25. Vorrichtung nach einem der Ansprüche 13 bis 24, dadurch gekennzeichnet, daß der Gelenkkopf (7) an der Haltestange (5) in Längsrichtung festgelegt ist.

26. Vorrichtung nach einem der Ansprüche 13 bis 25, dadurch gekennzeichnet, daß der Meßtaster (6) eine Rückstelleinrichtung zum Rückstellen des verschwenkten Meßtasthebels (9) und/oder des verdrehten Gelenkkopfes (7) aufweist.

27. Vorrichtung nach Anspruch 26, dadurch gekennzeichnet, daß die Rückstelleinrichtung mindestens eine Feder (48) zur Rückstellkrafterzeugung enthält.

28. Vorrichtung nach einem der Ansprüche 13 bis 27, dadurch gekennzeichnet, daß die Winkelmeßeinrichtung ein mit dem Meßtasthebel (9) gekoppeltes bogenförmiges Zahnsegment (14) zum Antreiben eines Zahnrades (17) eines Potentiometers (18) aufweist.

29. Vorrichtung nach einem der Ansprüche 13 bis 28, dadurch gekennzeichnet, daß die Winkelmeßeinrichtung ein Meßmittel zum Bestimmen der Verdrehung des Gelenkkopfes (7) um ihre Längsachse (3) der Haltestange (5) aufweist.

30. Vorrichtung nach einem der Ansprüche 13 bis 29, dadurch gekennzeichnet, daß am Meßtaster (6) durch eine Steuerung betriebene Antriebsmittel zum Verdrehen des Gelenkkopfes (7) und zum Verschwenken des Meßtasthebels (9) vorgesehen sind.

31. Vorrichtung nach einem der Ansprüche 13 bis 30, dadurch gekennzeichnet, daß der Tastfinger (11) eine Halterung für ein Ausgleichsgewicht (21) aufweist.

32. Vorrichtung nach einem der Ansprüche 13 bis 31, dadurch gekennzeichnet, daß der Meßtaster (6) nahe dem Grundkörper (1) der Auswuchtmaschine zur Messung der dem Grundkörper (1) zugewandten linken Seite einer aufgespannten Felge oder auf der von dem Grundkörper (1) abgewandten rechten Seite einer Felge zur Messung der gegenüberliegenden anderen Felgenseite angeordnet ist.

33. Vorrichtung nach Anspruch 32, dadurch gekennzeichnet, daß jeweils ein Meßtaster (6) in linksseitiger und in rechtsseitiger Anordnung vorgesehen ist.

34. Vorrichtung nach einem der Ansprüche 13 bis 33, dadurch gekennzeichnet, daß zur parallelen Ausrichtung mit der Hauptwelle (2) der Meßtasthebel (9) zwei parallele Schwenkarme (8, 8a) aufweist, die in Parallelogrammanordnung am Gelenkkopf (7) und am Tastkopf (10) zur hauptwellenparallelen Führung des Tastfingers (11) gelagert sind.

35. Vorrichtung nach einem der Ansprüche 13 bis 33, dadurch gekennzeichnet, daß der Meßtasthebel (9) einen Bowdenzug (9a) zur hauptwellenparallen Führung des Tastfingers (11) aufweist.

36. Vorrichtung nach einem der Ansprüche 13 bis 33, dadurch gekennzeichnet, daß der Meßtasthebel (9) ein Seil (19) und eine Feder (19a) zur hauptwellenparallelen Führung des Tastfingers (11) aufweist.

37. Vorrichtung nach einem der Ansprüche 13 bis 33, dadurch gekennzeichnet, daß der Meßtasthebel (9) eine Stößelstange (20) und eine Feder (20a) zur hauptwellenparallelen Führung des Tastfingers (11) aufweist.

38. Vorrichtung nach einem der Ansprüche 13 bis 37, dadurch gekennzeichnet, daß die Haltestange (5) zur Aufnahme von Anschlußleitungen der Winkelmeßeinrichtung hohl ausgebildet ist.

39. Auswuchtmaschine mit einer Vorrichtung zur Abtastung geometrischer Daten von auf eine Hauptwelle (2) der Auswuchtmaschine aufspannbaren, auszuwuchtenden Rotationskörpern, insbesondere von Kraftfahrzeugrädern, wobei die Vorrichtung einen Meßtaster (6) mit Tastfinger (11) zur Abtastung aufweist, der an einer zur Hauptwelle (2) parallelen Haltestange (5) der Auswuchtmaschine angeordnet und um die Längs- oder Drehachse der Haltestange drehbar ist,
wobei der Meßtaster (6) einen Gelenkkopf (7), der an der in Längsrichtung festgelegten Haltestange (5) um ihre Drehachse (3) drehbar angeordnet ist,
einen Meßtasthebel (9), der am Gelenkkopf (7) schwenkbar gelagert ist und einen zwangsgeführten Tastkopf (10) aufweist, und
eine am Gelenkkopf (7) angeordnete Winkelmeßeinrichtung aufweist, die den Schwenkwinkel des Meßtasthebels (9) bezüglich des Gelenkkopfes (7) erfaßt,
**dadurch gekennzeichnet,**
daß der Meßtasthebel (9) am Gelenkkopf (7) derart schwenkbar gelagert ist, daß der am Tastkopf (10) angeordnete Tastfinger (11) bei einer Schwenkbewegung des Meßtasthebels (9) in paralleler Ausrichtung zur Hauptwelle (2) auf das abzutastende Kraftfahrzeugrad zu und von ihm wegbewegbar ist, und
daß am Meßtaster (6) durch eine Steuerung betriebene Antriebsmittel zum Verdrehen des Gelenkkopfes (7) und zum Verschwenken des Meßtasthebels (9) vorgesehen sind.

## Claims

1. A method of balancing a motor vehicle wheel by means of at least one balancing weight (21), in particular an adhesive weight, which is fixed to the disc wheel or the rim (32) of the motor vehicle wheel at given positions which are determined by an electronic measuring system (35) during an unbalance measuring operation, wherein in the balancing operation a sensing apparatus which is coupled to the electronic measuring system is used for arranging the respective balancing weight (21) in the correct position on the disc wheel or the rim (32), with which sensing apparatus at least one disc wheel dimension is sensed for storage in the electronic measuring or evaluating system (35), for evaluation of the measurement values obtained in the unbalance measuring operation, wherein the respective balancing plane in which the balancing weight (21) is fitted for balancing purposes is sensed with the sensing apparatus for measurement value evaluation and the corresponding balancing plane position is stored in the electronic measuring system (35) and wherein the sensing apparatus has a measuring sensor (6) with sensing finger (11) which comprises a pivot head (7) which is arranged on a holding bar (5) which is fixed in the longitudinal direction, the pivot head being rotatable about the longitudinal axis or axis of rotation (3) of the holding bar, a measuring sensing lever (9) pivotably mounted to the pivot head (7) with a positively guided sensing head (10), and an angle measuring means which is arranged on the pivot head (7) and which detects the pivot angle of the measuring sensing lever (9) with respect to the pivot head (7), characterised in that the sensing finger (11) which is arranged on the sensing head (10) is movable towards and away from a wheel to be sensed upon a pivotal movement of the measuring sensing lever (9) in parallel orientation with respect to the main shaft (2), and that for retrieval of the respective balancing plane when fitting the balancing weight (21) to the disc wheel the sensing apparatus is moved and in that operation the distance of the sensing apparatus from the respective balancing plane is displayed.

2. A method according to claim 1 characterised in that a signal is produced by the electronic measuring system (35) when the respective balancing plane in which the balancing weight (21) is fitted is reached.

3. A method according to claim 1 or claim 2 characterised in that for sensing the balancing plane and the effective diameter of the fitted balancing weight (21) for measurement value evaluation, the internal dimension of the disc wheel is sensed in the respective balancing plane with a balancing weight disposed between the sensing apparatus and the internal dimension.

4. A method according to one of claims 1 to 3 characterised in that a rim cross-section with the respective possible balancing planes is displayed by a display device connected to the electronic measuring system (35), that a respective balancing plane intended for a selected balancing mode is indicated by a signal during the sensing operation, and the display is erased after sensing of the displayed balancing plane on the motor vehicle wheel to be measured.

5. A method according to claim 4 characterised in that the display of the balancing plane to be sensed on the motor vehicle wheel begins when the sensing apparatus is moved out of its rest position.

6. A method according to claim 4 or claim 5 characterised in that, to effect dynamic balancing, the two balancing planes to be sensed are displayed in succession.

7. A method according to one of claims 1 to 6 characterised in that the sensing apparatus is fixed in its respective sensing position.

8. A method according to claim 7 characterised in that the sensing apparatus is manually fixed.

9. A method according to claim 7 characterised in that the sensing apparatus is fixed under the control of the electronic measuring system (35).

10. A method according to one of claims 7 to 9 characterised in that, when the sensing apparatus is fixed, the motor vehicle wheel is turned into the angular balancing position.

11. A method according to one of claims 1 to 10 characterised in that the procedure is switched over between the sensing mode and the retrieval mode.

12. A method according to one of claims 1 to 11 characterised in that a balancing weight (21) is fitted into the sensing apparatus both in the sensing mode and in the retrieval mode and that the position of the centre of gravity of the balancing weight, being the position which is operative in the balancing operation, is used when sensing and retrieving the balancing plane.

13. Apparatus for balancing a motor vehicle wheel by means of at least one balancing weight (21), in particular an adhesive weight, which is fixed to the rim (32) of the motor vehicle wheel in given positions which are determined by an electronic measuring system (35) having a display device during an unbalancing measuring operation, wherein for the balancing operation for arranging the respective balancing weight (21) in the correct position on the rim (32) there is provided a sensing apparatus which is coupled to the electronic measuring system (35) and which has a position detection means (25) and with which at least one wheel dimension can be sensed for storage in a memory (26) of the electronic measuring system for evaluation of the measurement values obtained in the unbalance measuring operation, wherein the respective balancing plane in which the balancing weight (21) is fitted for the balancing operation is sensed with the sensing apparatus for measurement value evaluation and the corresponding balancing plane position can be stored in the electronic measuring system (35), and wherein the sensing apparatus has a measuring sensor (6) with sensing finger (11) which has a pivot head (7) which is arranged on a holding bar (5) which is fixed in the longitudinal direction, rotatably around the longitudinal axis thereof, a measuring sensing lever (9) with a positively guided sensing head (10) and an angle measuring means which is arranged on the pivot head (7) and which detects the pivot angle of the measuring sensing lever (9) with respect to the pivot head (7), characterised in that the measuring sensing lever (9) is mounted pivotably on the pivot head (7) in such a way that the sensing finger (11) arranged on the sensing head (10) is movable towards and away from the motor vehicle wheel to be sensed upon a pivotal movement of the measuring sensing lever (9) in parallel orientation with respect to the main shaft (2), and connected to the memory (26) and the position detection means (25) is a comparison means (27) which is connected to the display means (28), wherein for retrieval of the respective balancing plane when fitting the balancing weight (21) to the rim (32) the sensing apparatus is movable and in that operation the distance of the sensing apparatus from the respective balancing plane can be displayed.

14. Apparatus according to claim 13 characterised in that the electronic measuring system (35) produces a signal when the respective balancing plane is reached.

15. Apparatus according to claim 13 or claim 14 characterised in that there is provided a display means connected to the electronic measuring system (35) for a representation of the rim cross-section with the respectively possible balancing planes, wherein a respective balancing plane which is determined for a selected balancing mode can be displayed by a signal during the sensing operation, said plane ceasing to be displayed after sensing of the displayed balancing plane on the motor vehicle wheel to be measured.

16. Apparatus according to claim 15 characterised in that the display of the balancing plane to be sensed on the motor vehicle wheel appears when the sensing apparatus is moved out of its rest position.

17. Apparatus according to claim 15 or claim 16 characterised in that, to effect dynamic balancing, the display of the two balancing planes to be sensed occurs in succession.

18. Apparatus according to one of claims 13 to 17 characterised in that the sensing apparatus can be fixed in its respective sensing position.

19. Apparatus according to claim 18 characterised in that the sensing apparatus can be manually fixed.

20. Apparatus according to claim 18 characterised in that the sensing apparatus can be fixed under the control of the electronic measuring system (35).

21. Apparatus according to one of claims 18 to 20 characterised in that, when the sensing apparatus is fixed, the motor vehicle wheel can be turned into the angular balancing position.

22. Apparatus according to one of claims 13 to 21 characterised in that there is provided the possibility of switching over between the sensing mode and the retrieval mode.

23. Apparatus according to one of claims 13 to 22 characterised in that a balancing weight (21) is fitted into the sensing apparatus both in the sensing mode and in the retrieval mode, wherein the position of the centre of gravity of the balancing weight (21), being the position which is operative in the balancing operation, is used for ascertaining the balancing values and upon retrieval of the balancing plane.

24. Apparatus according to one of claims 13 to 23 characterised in that the longitudinal axis or axis of rotation (3) of the holding bar (5) and the axis of rotation (3) of a wheel guard hood (4) which can be pivoted over a wheel clamped in position are the same.

25. Apparatus according to one of claims 13 to 24 characterised in that the pivot head (7) is fixed on the holding bar (5) in the longitudinal direction.

26. Apparatus according to one of claims 13 to 25 characterised in that the measuring sensor (6) has a resetting means for resetting the pivoted measuring sensing lever (9) and/or the rotated pivot head (7).

27. Apparatus according to claim 26 characterised in that the resetting means includes at least one spring (48) for producing the resetting force.

28. Apparatus according to one of claims 13 to 27 characterised in that the angle measuring means has an arcuate toothed segment (14) coupled to the measuring sensing lever (9), for driving a toothed gear (17) of a potentiometer (18).

29. Apparatus according to one of claims 13 to 28 characterised in that the angle measuring means has a measuring means for determining the rotary movement of the pivot head (7) about the longitudinal axis (3) of the holding bar (5).

30. Apparatus according to one of claims 13 to 29 characterised in that provided on the measuring sensor (6) are drive means which are operated by a control means, for rotating the pivot head (7) and for pivoting the measuring sensing lever (9).

31. Apparatus according to one of claims 13 to 30 characterised in that the sensing finger (11) has a holder for a balancing weight (21).

32. Apparatus according to one of claims 13 to 31 characterised in that the measuring sensor (6) is arranged near the main body (1) of the balancing machine for measuring the left-hand side, which is towards the main body (1), of a rim which is clamped in position, or on the right-hand side of a rim, which is remote from the main body (1), for measuring the opposite other side of the rim.

33. Apparatus according to claim 32 characterised in that there are provided respective measuring sensors (6) in a left-hand arrangement and in a right-hand arrangement.

34. Apparatus according to one of claims 13 to 33 characterised in that for parallel orientation with the main shaft (2) the measuring sensing lever (9) has two parallel pivotal arms (8, 8a) which are mounted in a parallelogram assembly on the pivot head (7) and the sensing head (10) for guidance of the sensing finger (11) parallel to the main shaft.

35. Apparatus according to one of claims 13 to 33 characterised in that the measuring sensing lever (9) has a Bowden cable arrangement (9a) for guidance of the sensing finger (11) parallel to the main shaft.

36. Apparatus according to one of claims 13 to 33 characterised in that the measuring sensing lever (9) has a cable (19) and a spring (19a) for guidance of the sensing finger (11) parallel to the main shaft.

37. Apparatus according to one of claims 13 to 33 characterised in that the measuring sensing lever (9) has a pushrod (20) and a spring (20a) for guidance of the sensing finger (11) parallel to the main shaft.

38. Apparatus according to one of claims 13 to 37 characterised in that the holding bar (5) is hollow for accommodating connecting lines of the angle measuring means.

39. A balancing machine having an apparatus for sensing geometrical data of rotary bodies to be balanced, in particular motor vehicle wheels, which can be clamped on a main shaft (2) of the balancing machine, wherein the apparatus has a measuring sensor (6) with sensing finger (11) for the sensing operation, the measuring sensor being arranged on a holding bar (5) of the balancing machine, which is parallel to the main shaft (2), and the measuring sensor being rotatable about the longitudinal or axis of rotation of the holding bar, wherein the measuring sensor (6) has a pivot head (7) which is arranged on the holding bar (5) which is fixed in the longitudinal direction, the pivot head being rotatable about the axis of rotation (3) of the holding bar, a measuring sensing lever (9) which is mounted pivotably on the pivot head (7), and a positively guided sensing head (10), and has an angle measuring means which is arranged on the pivot head (7) and which detects the pivotal angle of the measuring sensing lever (9) relative to the pivot head (7), characterised in that the measuring sensing lever (9) is pivotably mounted on the pivot head (7) in such a way that the sensing finger (11) which is arranged on the sensing head (10) is movable towards and away from the motor vehicle wheel to be sensed upon pivotal movement of the measuring sensing lever (9) in parallel orientation with respect to the main shaft (2), and that there are provided drive means operated by a control on the measuring sensor (6) for rotating the pivot head (7) and for pivoting the measuring sensing lever (9).

## Revendications

1. Procédé d'équilibrage du balourd sur une roue de véhicule automobile à l'aide d'au moins une masselotte d'équilibrage (21), notamment une masselotte autocollante, qui est fixée sur la roue à disque ou la jante (32) de la roue de véhicule automobile, dans des positions définies, déterminées durant une opération de mesure de balourd par une électronique de mesure (35), procédé dans lequel on utilise, lors de l'opération d'équilibrage du balourd, pour la disposition en position correcte de la masselotte d'équilibrage (21) considérée sur roue à disque ou la jante (32), un dispositif de palpage couplé à l'électronique de mesure, à l'aide duquel on relève par palpage, en vue du traitement des valeurs de mesure obtenues lors de l'opération de mesure du balourd, au moins une dimension de la roue à disque pour une mémorisation dans l'électronique de mesure et de traitement (35), procédé dans lequel, par ailleurs, en vue du traitement des valeurs de mesures, on relève par palpage, à l'aide du dispositif de palpage, le plan d'équilibrage considéré dans lequel est placée la masselotte d'équilibrage (21) pour l'équilibrage du balourd, la position correspondante du plan d'équilibrage étant alors mémorisée dans l'électronique de mesure (35), et le dispositif de palpage présentant un palpeur de mesure (6) avec doigt de palpage (11), comprenant une tête d'articulation (7) disposée sur une tige de support (5) immobilisée dans la direction longitudinale, de manière à pouvoir tourner autour de l'axe longitudinal ou de l'axe de rotation (3) de cette dernière, un levier de palpage de mesure (9) monté pivotant sur la tête d'articulation (7) et doté d'une tête de palpage (10) à guidage forcé, et un dispositif de mesure d'angle placé sur la tête d'articulation (7) et relevant l'angle de pivotement du levier de palpage de mesure (9) par rapport à la tête d'articulation (7),
**caractérisé** en ce que le doigt de palpage (11) placé sur la tête de palpage (10) peut, lors d'un mouvement de pivotement du levier de palpage de mesure (9), être déplacé, selon une orientation parallèle à l'arbre principal (2), en direction d'une roue devant être détectée par palpage et de façon à s'éloigner de celle-ci, et en ce que pour retrouver le plan d'équilibrage considéré lors de la mise en place de la masselotte d'équilibrage (21) sur la roue à disque, on déplace le dispositif de palpage, la distance du dispositif de palpage au plan d'équilibrage considéré étant visualisée à cette occasion.

2. Procédé selon la revendication 1, **caractérisé** en ce que lorsqu'on atteint le plan d'équilibrage considéré, dans lequel est placée la masselotte d'équilibrage (21), l'électronique de mesure (35) engendre un signal.

3. Procédé selon la revendication 1 ou 2, **caractérisé** en ce que pour le palpage du plan d'équilibrage et du diamètre d'action de la masselotte d'équilibrage (21) utilisée, on relève par palpage, pour le traitement des valeurs de mesure, la dimension intérieure de la roue à disque dans le plan d'équilibrage considéré, avec la masselotte d'équilibrage placée entre le dispositif de palpage et la dimension intérieure.

4. Procédé selon l'une des revendications 1 à 3, **caractérisé** en ce qu'à l'aide d'un dispositif de visualisation relié à l'électronique de mesure (35), on visualise une section transversale de jante présentant les plans d'équilibrage respectifs possibles, en ce qu'un plan d'équilibrage considéré, affecté à un mode d'équilibrage sélectionné, est visualisé par un signal durant l'opération de palpage, et en ce qu'après la détection par palpage sur la roue de véhicule automobile à mesurer, du plan d'équilibrage visualisé, la visualisation est amenée à être effacée.

5. Procédé selon la revendication 4, **caractérisé** en ce que la visualisation du plan d'équilibrage devant être détecté par palpage sur la roue de véhicule automobile, débute lorsque le dispositif de palpage est déplacé hors de sa position de repos.

6. Procédé selon la revendication 4 ou 5, **caractérisé** en ce que pour effectuer un équilibrage dynamique du balourd, la visualisation des deux plans d'équilibrage devant être détectés par palpage, s'effectue successivement.

7. Procédé selon l'une des revendications 1 à 6, **caractérisé** en ce que le dispositif de palpage est immobilisé dans sa position de palpage considérée.

8. Procédé selon la revendication 7, **caractérisé** en ce que le dispositif de palpage est immobilisé manuellement.

9. Procédé selon la revendication 7, **caractérisé** en ce que le dispositif de palpage est immobilisé en étant commandé par l'électronique de mesure (35).

10. Procédé selon l'une des revendications 7 à 9, **caractérisé** en ce que lorsque le dispositif de palpage est immobilisé, on fait tourner la roue de véhicule automobile dans la position angulaire d'équilibrage.

11. Procédé selon l'une des revendications 1 à 10, **caractérisé** en ce qu'on effectue la commutation entre le mode de palpage et le mode de recherche rétrospective.

12. Procédé selon l'une des revendications 1 à 11, **caractérisé** en ce qu'aussi bien pour le mode de palpage que pour le mode de recherche rétrospective, on place une masselotte d'équilibrage (21) dans le dispositif de palpage, et en ce qu'on utilise la position effective du centre de gravité de la masselotte d'équilibrage pendant l'équilibrage du balourd, lors du palpage et de la recherche rétrospective du plan d'équilibrage.

13. Dispositif d'équilibrage du balourd sur une roue de véhicule automobile à l'aide d'au moins une masselotte d'équilibrage (21), notamment une masselotte autocollante, qui est fixée sur la jante (32) de la roue de véhicule automobile, dans des positions définies, déterminées durant une opération de mesure de balourd, par une électronique de mesure (35) comprenant un dispositif de visualisation, dispositif dans lequel est prévu pour l'opération d'équilibrage du balourd, pour la disposition en position correcte de la masselotte d'équilibrage (21) considérée sur la jante (32), un dispositif de palpage couplé à l'électronique de mesure et comprenant un dispositif de reconnaissance de position (25), à l'aide duquel on relève par palpage, en vue du traitement des valeurs de mesure obtenues lors de l'opération de mesure du balourd, au moins une dimension de la roue pour une mémorisation dans une mémoire (26) de l'électronique de mesure, dispositif dans lequel, en vue du traitement des valeurs de mesures, on relève par palpage, à l'aide du dispositif de palpage, le plan d'équilibrage considéré dans lequel est placée la masselotte d'équilibrage (21) pour l'équilibrage du balourd, la position correspondante du plan d'équilibrage pouvant alors être mémorisée dans l'électronique de mesure (35), et le dispositif de palpage présentant un palpeur de mesure (6) avec doigt de palpage (11), comprenant une tête d'articulation (7), qui est disposée sur une tige de support (5) immobilisée dans la direction longitudinale, de manière à pouvoir tourner autour de l'axe longitudinal ou de l'axe de rotation (3) de cette dernière, un levier de palpage de mesure (9) monté pivotant sur la tête d'articulation (7) et doté d'une tête de palpage (10) à guidage forcé, et un dispositif de mesure d'angle placé sur la tête d'articulation (7) et relevant l'angle de pivotement du levier de palpage de mesure (9) par rapport à la tête d'articulation (7),
**caractérisé** en ce que le levier de palpage de mesure (9) est monté de manière pivotante sur la tête d'articulation (7), de façon telle, que le doigt de palpage (11) placé sur la tête de palpage (10) peut, lors d'un mouvement de pivotement du levier de palpage de mesure (9), être déplacé, selon une orientation parallèle à l'arbre principal (2), en direction d'une roue devant être détectée par palpage et de façon à s'éloigner de celle-ci, en ce qu'à la mémoire (26) et au dispositif de reconnaissance de position (25) est relié un comparateur (27) raccordé au dispositif de visualisation (28), et en ce que pour retrouver le plan d'équilibrage considéré lors de la mise en place de la masselotte d'équilibrage (21) sur la jante (32), le dispositif de palpage peut être déplacé et la distance du dispositif de palpage au plan d'équilibrage considéré peut être visualisée à cette occasion.

14. Dispositif selon la revendication 13, **caractérisé** en ce que lorsque le plan d'équilibrage considéré a été atteint, l'électronique de mesure (35) engendre un signal.

15. Dispositif selon la revendication 13 ou 14, **caractérisé** en ce qu'il est prévu un dispositif de visualisation relié à l'électronique de mesure (35), pour représenter une section transversale de jante présentant les plans d'équilibrage respectifs possibles, un plan d'équilibrage considéré affecté à un mode d'équilibrage sélectionné, pouvant être visualisé par un signal durant l'opération de palpage, et étant effacé après la détection par palpage sur la roue de véhicule automobile à mesurer, du plan d'équilibrage visualisé.

16. Dispositif selon la revendication 15, **caractérisé** en ce que la visualisation du plan d'équilibrage devant être détecté par palpage sur la roue de véhicule automobile, apparaît lorsque le dispositif de palpage est déplacé hors de sa position de repos.

17. Dispositif selon la revendication 15 ou 16, **caractérisé** en ce que pour effectuer un équilibrage dynamique du balourd, la visualisation des deux plans d'équilibrage devant être détectés par palpage, s'effectue successivement.

18. Dispositif selon l'une des revendications 13 à 17, **caractérisé** en ce que le dispositif de palpage peut être immobilisé dans sa position de palpage considérée.

19. Dispositif selon la revendication 18, **caractérisé** en ce que le dispositif de palpage peut être immobilisé manuellement.

20. Dispositif selon la revendication 18, **caractérisé** en ce que le dispositif de palpage peut être immobilisé en étant commandé par l'électronique de mesure (35).

21. Dispositif selon l'une des revendications 18 à 20, **caractérisé** en ce que lorsque le dispositif de palpage est immobilisé, on peut faire tourner la roue de véhicule automobile dans la position angulaire d'équilibrage.

22. Dispositif selon l'une des revendications 13 à 21, **caractérisé** en ce qu'il est prévu une possibilité de commutation entre le mode de palpage et le mode de recherche rétrospective.

23. Dispositif selon l'une des revendications 13 à 22, **caractérisé** en ce qu'aussi bien pour le mode de palpage que pour le mode de recherche rétrospective, une masselotte d'équilibrage est placée dans le dispositif de palpage, la position effective du centre de gravité de la masselotte d'équilibrage (21) lors de l'équilibrage du balourd, étant utilisée lors du palpage pour déterminer les valeurs d'équilibrage du balourd et lors de la recherche rétrospective du plan d'équilibrage.

24. Dispositif selon l'une des revendications 13 à 23, **caractérisé** en ce que l'axe longitudinal ou l'axe de rotation (3) de la tige de support (5) et l'axe de rotation (3) d'un capot de protection de roue (4) pouvant être rabattu par-dessus une roue montée dans la machine d'équilibrage, coïncident.

25. Dispositif selon l'une des revendications 13 à 24, **caractérisé** en ce que la tête d'articulation (7) est immobilisée dans la direction longitudinale sur la tige de support (5).

26. Dispositif selon l'une des revendications 13 à 25, **caractérisé** en ce que le palpeur de mesure (6) présente un dispositif de rappel destiné à ramener en position le levier de palpage de mesure (9) ayant pivoté et/ou la tête d'articulation (7) ayant subi une rotation.

27. Dispositif selon la revendication 26, **caractérisé** en ce que le dispositif de rappel comprend au moins un ressort (48) destiné à engendrer la force de rappel.

28. Dispositif selon l'une des revendications 13 à 27, **caractérisé** en ce que le dispositif de mesure d'angle comprend un segment denté (14) en forme d'arc, couplé au levier de palpage de mesure (9) et destiné à entraîner une roue dentée (17) d'un potentiomètre (18).

29. Dispositif selon l'une des revendications 13 à 28, **caractérisé** en ce que le dispositif de mesure d'angle comprend un moyen de mesure destiné à déterminer la rotation de la tête d'articulation (7) autour de l'axe longitudinal (3) de la tige de support (5).

30. Dispositif selon l'une des revendications 13 à 29, **caractérisé** en ce que sur le palpeur de mesure (6) sont prévus des moyens d'entraînement pilotés par une commande et destinés à faire tourner la tête d'articulation (7) et à faire pivoter le levier de palpage de mesure (9).

31. Dispositif selon l'une des revendications 13 à 30, **caractérisé** en ce que le doigt de palpage (11) comprend un système de support pour une masselotte d'équilibrage (21).

32. Dispositif selon l'une des revendications 13 à 31, **caractérisé** en ce que le palpeur de mesure (6) est disposé à proximité du corps de base (1) de la machine d'équilibrage en vue de mesurer le côté gauche, dirigé vers le corps de base (1), d'une jante montée sur la machine d'équilibrage, ou sur le côté droit d'une jante éloigné du corps de base (1), pour mesurer l'autre côté opposé d'une jante.

33. Dispositif selon la revendication 32, **caractérisé** en ce que l'on prévoit un palpeur de mesure (6) pour une disposition du côté droit et un palpeur de mesure pour une disposition du côté gauche.

34. Dispositif selon l'une des revendications 13 à 33, **caractérisé** en ce que pour l'orientation parallèle avec l'arbre principal (2), le levier de palpage de mesure (9) présente deux bras pivotants (8, 8a) parallèles, qui sont montés selon un agencement en parallélogramme sur la tête d'articulation (7) et la tête de palpage (10), pour guider le doigt de palpage (11) parallèlement à l'arbre principal.

35. Dispositif selon l'une des revendications 13 à 33, **caractérisé** en ce que le levier de palpage de mesure (9) comporte un câble sous gaine (9a) du type Bowden pour guider le doigt de palpage (11) parallèlement à l'arbre principal.

36. Dispositif selon l'une des revendications 13 à 33, **caractérisé** en ce que le levier de palpage de mesure (9) comporte un câble (19) et un ressort (19a) pour guider le doigt de palpage (11) parallèlement à l'arbre principal.

37. Dispositif selon l'une des revendications 13 à 33, **caractérisé** en ce que le levier de palpage de mesure (9) comporte une tige-poussoir (20) et un ressort (20a) pour guider le doigt de palpage (11) parallèlement à l'arbre principal.

38. Dispositif selon l'une des revendications 13 à 37, **caractérisé** en ce que la tige de support (5) est d'une configuration creuse en vue de recevoir des lignes de raccordement du dispositif de mesure d'angle.

39. Machine d'équilibrage comportant un dispositif destiné à relever par palpage des données géométriques de corps de rotation, notamment de roues de véhicules automobiles, pouvant être montés sur un arbre principal (2) de la machine d'équilibrage et devant être équilibrés, le dispositif comprenant un palpeur de mesure (6) avec doigt de palpage (11) pour le palpage, qui est disposé sur une tige de support (5) de la machine d'équilibrage, parallèle à l'arbre principal (2), et qui peut tourner autour de l'axe longitudinal ou de l'axe de rotation de la tige de support,
le palpeur de mesure (6) comprenant une tête d'articulation (7) qui est disposée sur la tige de support (5) immobilisée dans la direction longitudinale et qui peut tourner autour de l'axe de rotation de la tige de support,
comprenant également un levier de palpage de mesure (9) monté de manière pivotante sur la tête d'articulation (7) et doté d'une tête de palpage (10) à guidage forcé, et
comprenant un dispositif de mesure d'angle placé sur la tête d'articulation (7) et relevant l'angle de pivotement du levier de palpage de mesure (9) par rapport à la tête d'articulation (7),
**caractérisé** en ce que le levier de palpage de mesure (9) est monté de manière pivotante sur la tête d'articulation (7), de façon telle, que le doigt de palpage (11) placé sur la tête de palpage (10) puisse, lors d'un mouvement de pivotement du levier de palpage de mesure (9), être déplacé, selon une orientation parallèle à l'arbre principal (2), vers la roue à détecter par palpage et en s'en éloignant, et en ce que sur le palpeur de mesure (6) sont prévus des moyens d'entraînement pilotés par une commande et destinés à faire tourner la tête d'articulation (7) et à faire pivoter le levier de palpage de mesure (9).
